(19) **Europäisches Patentamt**
**European Patent Office**
**Office européen des brevets**

(11) **EP 1 986 794 B1**

(12) **FASCICULE DE BREVET EUROPEEN**

(45) Date de publication et mention
de la délivrance du brevet:
**18.01.2012 Bulletin 2012/03**

(51) Int Cl.:
*B08B 3/10* (2006.01)   *B08B 3/12* (2006.01)
*B08B 7/00* (2006.01)   *G21F 9/12* (2006.01)
*B01D 11/02* (2006.01)

(21) Numéro de dépôt: **07704703.3**

(22) Date de dépôt: **23.02.2007**

(86) Numéro de dépôt international:
**PCT/EP2007/051773**

(87) Numéro de publication internationale:
**WO 2007/096424 (30.08.2007 Gazette 2007/35)**

(54) **PROCEDE DE DECONTAMINATION D ' UN SUBSTRAT SOLIDE ORGANIQUE**

VERFAHREN ZUM DEKONTAMINIEREN EINES ORGANISCHEN FESTEN SUBSTRATS

PROCESS FOR DECONTAMINATING AN ORGANIC SOLID SUBSTRATE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **24.02.2006 FR 0650650**

(43) Date de publication de la demande:
**05.11.2008 Bulletin 2008/45**

(73) Titulaires:
• **Commissariat à l'Énergie Atomique et aux Énergies Alternatives
75015 Paris (FR)**
• **Areva NC
75009 Paris (FR)**

(72) Inventeurs:
• **FOURNEL, Bruno
30200 Bagnols/Cese (FR)**
• **GALY, Julien
F-31390 Carbonne (FR)**

• **BARTH, Frédéric
F-26130 Saint-Paul Trois Châteaux (FR)**
• **LACROIX DESMAZEZ, Patrick
F-34090 Montpellier (FR)**
• **LAGERGE, Serge
F-34400 Lunel (FR)**
• **DUSSOLLIET, Sophie
F-13390 AURIOL (FR)**
• **BLANCHER, Jérôme
F-84350 Courthezon (FR)**

(74) Mandataire: **Poulin, Gérard et al
BREVALEX
95, rue d'Amsterdam
75378 Paris Cedex 8 (FR)**

(56) Documents cités:
EP-A- 1 548 810      FR-A1- 2 815 559
US-A1- 2003 196 679   US-A1- 2004 055 624
US-B1- 6 312 528

## Description

La présente invention est relative à un procédé de nettoyage, de décontamination radioactive d'un substrat organique, solide, contaminé, pollué, souillé, par des contaminants inorganiques particulaires solides, radioactifs, à l'aide de $CO_2$ dense sous pression, en particulier de $CO_2$ supercritique.

Le procédé selon l'invention trouve notamment son application dans la décontamination des déchets nucléaires organiques contaminés par des oxydes radioactifs polaires tels que le $PuO_2$.

De tels déchets sont générés par exemple au cours du processus de fabrication du combustible nucléaire appelé MOX (Mixed OXides) composé d'un mélange d'oxyde d'uranium ($UO_2$) et d'oxyde de plutonium ($PuO_2$)

La majeure partie de ces déchets est constituée de gants de boîte à gants (« BaG ») et de manches de sortie de déchets. Ces déchets constituent des déchets « Non Susceptibles d'un Stockage de Surface » (NSSS).

Ces déchets organiques sont composés pour l'essentiel de PVC, de polyuréthane et d'Hypalon®

La décontamination radioactive a notamment pour but, par exemple dans le cas des déchets organiques contaminés issus du procédé de préparation du MOX mentionnés plus haut, de diminuer l'activité alpha du substrat, contaminé traité afin de permettre son conditionnement et son stockage dans des conditions moins contraignantes et à des coûts moindres que les déchets NSSS.

I1 existe de nombreux procédés de décontamination qui sont des procédés chimiques, physiques ou physico-chimiques.

Les techniques de décontamination, jusqu'alors couramment utilisées, sont des techniques chimiques visant essentiellement à solubiliser le contaminant, polluant et à réaliser une extraction ; elles consistent généralement à mettre en oeuvre des solvants organiques, ou détergents ou tensioactifs en solutions aqueuses.

Les déchets décrits plus haut générés au cours du processus de fabrication du combustible MOX sont actuellement traités par un procédé mettant en oeuvre une solubilisation du $PuO_2$ dans une solution argentique. Ce procédé génère néanmoins des effluents liquides contaminés qui doivent ensuite subir un traitement spécifique.

Les procédés de décontamination par solvants présentent ainsi de nombreux inconvénients, notamment en termes de volume des déchets générés d'une part, et en terme de contraintes fortes de conception liées au risque de criticité dans le cas du $PuO_2$ d'autre part. c'est la raison pour laquelle l'utilisation de fluides à l'état dense sous pression, gaz, liquide ou, en particulier, supercritique (« SC »), pour le nettoyage, la décontamination de pièces, a été envisagée et étudiée.

En effet, ces fluides présentent des propriétés solvantes leur permettant de se substituer à nombre de solvants courants employés dans les techniques de nettoyage.

De plus, les qualités particulières de ces fluides permettent de mettre au point des procédés respectueux de l'environnement et générant de faibles quantités de rejets.

En particulier, le - nettoyage par le $CO_2$ dense, gaz, liquide ou supercritique a été très largement étudié et développé et a atteint, le stade industriel.

Le domaine supercritique (« SC ») est une phase particulière du $CO_2$. Au-delà de son point critique (Tc = 31,1°C, 294,1 K et Pc = 7,4MPa), le $CO_2$ est dit supercritique et voit ses propriétés physicochimiques évoluer et se situer entre celles des gaz et des liquides.

Le $CO_2$ est le fluide le plus couramment utilisé-pour l'extraction par fluide supercritique car le $CO_2$ est inerte et ininflammable. Par conséquent, ce fluide est mis en oeuvre avec une plus grande facilité.

Dans le cas d'extraction de composés polaires inorganiques, il est nécessaire de rajouter des cosolvants ou des tiers corps ou additifs pour augmenter la solubilité des molécules polaires dans le $CO_2$. Les co-solvants sont généralement des alcools, alors que les tiers corps ou additifs se présentent sous la forme de tensioactifs ou de ligands. Ces composés entrent dans divers procédés d'extraction ou de décontamination de matrices par $CO_2$ SC. Les applications sont diverses, mais elles s'articulent toutes autour de la synergie entre le $CO_2$ SC et l'additif.

En d'autres termes, la nature apolaire du $CO_2$ SC est le principal problème pour l'extraction d'espèces chargées polaires inorganiques ou organiques telles que les oxydes métalliques comme le $PuO_2$ et les ions, les molécules organiques polaires comme les graisses, et les composés organométalliques.

Il se produit en effet une redéposition très rapide des contaminants, par exemple des oxydes, et il n'y a pas de transfert et de mise en suspension efficace. Le solvant, à savoir par exemple le $CO_2$, ou le $CO_2$ et le co-solvant, ne peut interagir par exemple avec les ions métalliques ou les oxydes particulaires. Il est donc nécessaire d'ajouter des additifs tels que des ligands ou des tensioactifs au $CO_2$ pour augmenter sa polarité.

Aussi bien dans le cas des ligands que dans le cas des tensioactifs, il est préférable d'utiliser des composés fluorés car ils sont solubles dans le $CO_2$ SC. Cela pose néanmoins un problème de post traitement dans l'industrie nucléaire.

Les tensioactifs exempts de fluor, moins solubles, suscitent de plus en plus l'intérêt des chercheurs [10] [11] [12] [13] [14]. La principale difficulté réside dans la solubilisation délicate des tensioactifs non fluorés dans le $CO_2$ SC. La littérature fait état de microémulsions eau dans $CO_2$, mais en présence de tensioactifs fluorés [15] [16].

Des études ont été menées [1] [2] sur la contamination sous forme de cations métalliques tels que $Ni^{2+}$, $Cr^{3+}$ mais aussi de cations de radioéléments tels que $Am^{3+}$, ... etc. La stratégie de décontamination se développe dans ce cas précis par une utilisation de ligands complexants. En effet, ces derniers, à condition d'être judicieusement choisis, permettront une extraction efficace et sélective des cations métalliques.

Les documents [3] et [4] décrivent ainsi des procédés de décontamination par complexants. Les résultats obtenus sur différentes matrices sont remarquables. Cependant, les composés utilisés peuvent se montrer chers et très polluants. De plus, une phase aqueuse nitrique est nécessaire à la faisabilité de l'extraction. De nouveau se pose le problème des effluents générés par cette phase aqueuse.

Un autre domaine d'application des fluides supercritiques est la séparation des radioéléments.

Le document [5] étudie un procédé équivalent au procédé PUREX mais en milieu $CO_2$ SC. Rappelons que le procédé PUREX est utilisé pour séparer le plutonium de l'uranium. Pour cela, l'acide nitrique est conjugué au TBP (phosphate de tributyle) dans le but de former le complexe $[UO_2(NO_3)_2(TBP)_2]$. Ce complexe est alors extractible par la phase continue. Dans le procédé « Super-DIREX » qui fait l'objet de ce document, la phase continue est le $CO_2$ SC. On traite le combustible irradié d'une centrale nucléaire et on montre que le rendement d'extraction du Pu et U dépend de la température et de la pression opératoire du procédé.

Généralement, l'extraction de l'uranium et du plutonium du milieu nitrique se fait par une addition d'un solvant hydrocarboné comme le dodécane et du TBP. Le document [6] rapporte que le $CO_2$ SC est une alternative avantageuse, notamment en termes de stabilité vis-à-vis des radiations.

Les documents [7] et [8] utilisent du $CO_2$ SC saturé avec des bases de Lewis telles que le TBP, l'oxyde de tributyl phosphine (TBPO), l'oxyde de triphénylphosphine (TBPO) ou bien l'oxyde de tri-n-octylphosphine (TOPO) pour extraire des ions d'uranium ou de thorium de matrices solides ou bien de solutions nitriques. Le $CO_2$ SC bulle dans une solution nitrique pendant 15 minutes en statique et 15 minutes en dynamique. Les conditions opératoires sont 200 bars et 60°C avec une concentration de $HNO_3$ de 1M pour une efficacité de plus de 90%.

Les documents [9], [3] et [4] utilisent des β-dicétones et ligands organophosphorés fluorés pour l'extraction d'uranium, de lanthanides de surfaces solides. L'efficacité dépasse les 95% sur des contaminations réelles.

Le document US-B1-6312528 montre un procédé de décontamination, de nettoyage, d'un substrat solide organique contaminé par des contaminants inorganiques selon une partie de la revendication 1, dans lequel:

- on met en contact ledit substrat solide avec un milieu d'extraction, exempt d'eau, comprenant:

  • du $CO_2$ dense sous pression;

  • au moins un composé tensioactif non halogéné;

- on soumet, simultanément à la mise en contact, le substrat solide et/ou le milieu d'extraction à une action mécanique.

La décontamination des substrats contaminés par du $PuO_2$ est pour l'instant peu étudiée en milieu supercritique.

Les procédés et dispositifs existants de nettoyage, décontamination, par un fluide dense sous pression, en particulier supercritique, ne permettent pays d'obtenir une décontamination suffisante des substrats, pièces, ou matériaux organiques contaminés par des contaminants inorganiques solides radioactifs particulaires, en particulier lorsque ces contaminants sont des composés polaires tels que le $PuO_2$.

Par ailleurs, des procédés et dispositifs de décontamination de l'art antérieur mettent en oeuvre des milieux aqueux qui sont à proscrire en raison du risque de criticité associé à l'eau qui est un modérateur de neutrons.

En outre, le problème de la recontamination des pièces nettoyées par les particules solides de contaminant, insolubles dans le fluide dense, qui se redéposent sur les pièces propres, n'est résolu de manière satisfaisante par aucun des procédés et dispositifs de l'art antérieur.

De plus, les procédés et dispositifs de l'art antérieur ne sont à même d'assurer la décontamination que de faibles quantités de matériaux et de pièces de petite taille et de poids peu important.

Il existe donc un besoin pour un procédé de nettoyage, de décontamination, par un fluide dense sous pression, d'un substrat contaminé par des contaminants inorganiques solides radioactifs particulaires, en particuliers polaires tels que le $PuO_2$, qui permette de satisfaire aux exigences et critères sévères de l'industrie nucléaire par exemple en matière de criticité et doit éviter par conséquence notamment l'utilisation d'eau ou de milieux aqueux.

Il existe, encore, un besoin pour un tel procédé de nettoyage, de décontamination qui génère une, quantité limitée voire nulle d'effluents primaires et secondaires, en particulier d'effluents liquides et qui évite ainsi d'avoir recours encore à d'autres procédés pour traiter ces effluents.

Il existe aussi un besoin pour un procédé qui puisse être mis en oeuvre à des pressions et températures relativement faibles. La pression est en effet une contrainte importante dans le cadre de tout procédé nucléaire et il serait intéressant de pouvoir travailler à des pressions plus faibles que celles jusqu'alors utilisées.

Il existe ensuite un besoin pour un tel procédé qui permette d'obtenir un nettoyage parfait et ce même de pièces de grande taille et de poids élevé et de grandes quantités de matériaux quelle que soit la nature de ces matériaux.

Il existe encore un besoin pour un procédé de nettoyage, de décontamination, par un fluide dense sous pression, qui évite la (re)contamination des pièces nettoyées par redéposition des particules solides.

Il existe enfin un besoin pour un tel procédé qui soit simple, fiable, facile à mettre en oeuvre, et n'utilise que des composés facilement disponibles et d'un faible coût.

Le but de la présente invention est de fournir un procédé de décontamination, nettoyage, par un fluide dense sous pression, qui réponde, entre autres, aux besoins mentionnés ci-dessus.

Ce but et d'autres encore sont atteints, conformément à la présente invention selon la revendication 1, par un procédé de décontamination, de nettoyage, d'un substrat solide organique contaminé par des contaminants inorganiques, radioactifs, solides, en particules, dans lequel :

- on met en contact ledit substrat solide avec un milieu d'extraction, exempt d'eau, comprenant :

    • du $CO_2$ dense sous pression ;
    • au moins un composé tensioactif non halogéné choisi parmi les copolymères blocs (séquencés) de poly(oxyde d'éthylène) POE et de poly(oxyde de propylène) POP tels que les copolymères di-blocs $(OE)_x$-$(OP)_y$, les copolymères triblocs $(OE)_x$-$(OP)y$-$(OE)_x$ et les copolymères triblocs $(OP)_x$-$(OE)_y$-$(OP)_x$, où x et y sont des nombres entiers de 2 à 80 avec x différent de y ; et les polydialkyl (1 à 6C) siloxanes tels que le polydiméthyl siloxane (PDMS) ; et
    • au moins un agent complexant choisi parmi le tributylphosphate (TBP), les éthers couronnes, l'oxyde de tributylphosphine, l'oxyde de triphénylphosphine, et l'oxyde de tri-n-octylphosphine ;

- on soumet, simultanément à la mise en contact, le substrat solide et/ou le milieu d'extraction à une action mécanique.

Ledit composé tensioactif peut être défini de manière générale comme un composé abaissant la valeur de la tension interfaciale de référence eau/$CO_2$ en dessous de 10 mN.m$^{-1}$.

Indiquons par ailleurs que le terme « agent complexant » est presque impropre dans le contexte de l'invention, mais a été utilisé à des fins de simplification.

En effet, il n'y a pas dans le procédé de l'invention de complexation au sens habituel, chimique. Il faudrait plutôt évoquer une affinité particulière avec la contamination.

Un procédé, de décontamination qui met en oeuvre un milieu d'extraction spécifique qui est, de manière fondamentale, exempt d'eau, et qui comprend du $CO_2$ sous pression, un composé tensioactif spécifique non halogéné, notamment non fluoré, constitué uniquement d'atomes choisis parmi O, N, C et H, et choisi parmi les composés définis plus haut, et un agent complexant spécifique ; ledit procédé soumettant en outre simultanément le substrat à une action mécanique, n'est ni décrit ni suggéré par l'art antérieur représenté notamment par les documents cités plus haut.

Le procédé selon l'invention répond à tous les besoins, critères et exigences mentionnés plus haut et apporte une solution aux problèmes des procédés de l'art antérieur.

Le procédé de décontamination selon l'invention utilise des tensioactifs non halogénés, en particulier non fluorés, dans un milieu dense sous pression, notamment supercritique. Il ne nécessite pas de manière surprenante, la présence d'eau pour mettre en oeuvre ces tensioactifs. Le procédé selon l'invention va ainsi à l'encontre de la démarche suivie jusqu'à présent, dans laquelle les tensioactifs étaient solubilisés dans un milieu aqueux, et surmonte un préjugé largement répandu dans ce domaine de la technique.

Il est extrêmement étonnant que, même en l'absence d'eau, l'on obtienne d'excellentes performances de nettoyage, décontamination, extraction ; cela est dû notamment à la nature particulière des tensioactifs spécifiques mis en oeuvre selon l'invention ainsi qu'à la combinaison de ces tensioactifs d'une part avec un agent complexant spécifique et d'autre part avec l'action mécanique exercée sur le substrat et/ou le milieu d'extraction qui favorise le transfert des contaminants depuis le substrat solide vers la phase dense sous pression, par exemple supercritique. On peut dire qu'il se produit une véritable synergie, liée à une combinaison d'effets avantageux, entre d'une part le milieu d'extraction spécifique mis en oeuvre, exempt d'eau et d'autre part, l'action mécanique à laquelle est soumise le substrat ; cette synergie aboutissant à une efficacité de décontamination, extraction, nettoyage excellente est d'autant plus inattendue qu'elle s'applique à des contaminants habituellement très difficiles à éliminer qui sont les contaminants inorganiques solides particulaires radioactifs présents dans/sur un substrat organique.

L'absence d'eau diminue grandement le volume des effluents liquides générés et diminue les risques de criticité en milieu nucléaire. Le procédé melon l'invention s'appliquant à l'élimination de contaminants radioactifs l'absence d'eau est un avantage fondamental apporté par le procédé de l'invention. De même, la mise en oeuvre d'un tensioactif non halogéné, dit C, H, O, N répond aux exigences spécifiques de l'industrie nucléaire.

En d'autres termes; le procédé selon l'invention apporte une solution aux problèmes extrêmement spécifiques posés par les contaminants solides particulaires radioactifs notamment polaires tels que le $PuO_2$ qui sont des problèmes liés à la fois à la décontamination proprement dite mais aussi à la nature spécifiquement nucléaire du procédé. De manière étonnante, le procédé selon l'invention permet de résoudre simultanément ces deux problèmes, dont lets solutions apparaissent contradictoires. Selon l'invention, on obtient une grande efficacité de décontamination, mais sans eau, sans tensioactif fluoré, on génère ainsi peu de déchets, et on évite tout risque de criticité.

En effet, le procédé selon l'invention est caractérisé par l'absence d'effluents primaires et secondaires notamment aqueux, cet avantage étant lié au fait que, conformément à l'invention on met en oeuvre un milieu exempt d'eau, de ce fait le procédé selon l'invention ne nécessite pas en aval de traitement des résidus issus du procédé, la contamination est directement récupérée et l'on ne disperse pas cette contamination dans une collecte d'effluents. En outre, on opère à faible pression notamment dans le cas où le milieu d'extraction comprend en outre un cosolvant, choisi par exemple parmi les alcools à chaîne courte tels que l'éthanol, le propanol et l'isopropanol qui permet d'abaisser la pression de travail.

Il est à noter que la problématique de la décontamination en milieu nucléaire est extrêmement spécifique et que donc les enseignements des procédés d'extraction, nettoyage, mis en oeuvre en milieu non radioactif ne peuvent s'appliquer à la décontamination en milieu nucléaire du fait des problèmes supplémentaires liés notamment à la criticité à la réduction au minimum des déchets, et à la pression.

Le procédé selon l'invention qui donc, n'utilise pas de phase aqueuse, pourrait être défini comme un procédé de décontamination physico-chimique « sec » sans solvant classique mais avec un solvant dense sous pression en particulier supercritique.

Dans le procédé selon l'invention, il se produit un effet conjugué, synergique, s'exprimant en l'absence d'eau, du $CO_2$ dense sous pression, par exemple supercritique, des tensioactifs particuliers mis en oeuvre, de l'agent complexant spécifique utilisé des cosolvants éventuels et enfin de l'action mécanique.

Le fluide notamment à l'état supercritique permet de réaliser des extractions performantes ; le tensioactif particulier permet d'obtenir une véritable dispersion des particules solides de contaminants dans le fluide dense sous pression ; le complexant et le cosolvant éventuel permettent, notamment d'accroître la solubilité du tensioactif et donc d'opérer à pression réduite, et le complexant augmente aussi le facteur de décontamination ; et enfin l'action mécanique favorise le transfert des contaminants depuis le substrat solide vers la phase dense sous pression.

La présence du complexant et du cosolvant éventuel peut également produire une interaction avec les substrats traités.

Cet effet synergique mentionné plus haut assure l'entraînement, de manière étonnante en l'absence de tout ajout de phase aqueuse supplémentaire, des contaminants, radioactifs, en milieu dense sous pression par exemple supercritique et la récupération efficace de ces contaminants.

Alors même que l'on évite d'utiliser les tensioactifs halogénés, supposés de grande efficacité et que l'on aurait pu s'attendre à de faibles performances d'extraction, on obtient cependant selon l'invention, avec les tensioactifs spécifiques mis en oeuvre, supposés moins performants, d'excellents résultats, de surcroît en l'absence d'eau. Ces excellents résultats semblent notamment reliés à la mise en oeuvre de l'action mécanique sus mentionnée.

En outre, selon l'invention, on a mis en évidence, de manière originale qu'il n'existe pas de lien entres la solubilité et l'efficacité de l'extraction. Selon l'invention, on cherche plutôt, en allant à l'encontre de la démarche commune, à disperser et non à solubiliser les contaminants et on obtient de la sorte d'excellents résultats en économisant en outre les tensioactifs.

Du fait qu'il n'y a pas d'ajout d'eau, il n'y a pas de formation d'une émulsion, désavantageuse de par les effluents liquides importants qu'elle génère, mais, étonnamment, formation d'une « fumée » des contaminants, par exemple des oxydes dans le $CO_2$ dense sous pression, par exemple le $CO_2$ supercritique. Cette « fumée » est en fait une dispersion « sèche » des particules solides de contaminant par exemple d'oxyde, radioactif, dans le fluide dense sous pression rendue possible par le tensioactif en l'absence d'eau. Que le fluide dense et les contaminants puissent prendre une forme, aussi surprenante que celle d'une « fumée » n'est ni décrite ni suggérée dans l'art antérieur.

Le milieu d'extraction mis en oeuvre dans le procédé selon l'invention est donc, fondamentalement un milieu d'extraction « exempt d'eau ».

Par « exempt d'eau » au sens de l'invention, on entend que le milieu d'extraction ne contient pas d'eau ajoutée.

La teneur en eau est généralement inférieure à 0,02% massique par rapport à la masse du ou des tensioactifs.

Plus précisément, on peut considérer que l'eau présente dans le milieu d'extraction n'est que l'eau présente en tant qu'impureté inévitable qui pourrait se trouver présente dans les divers composés, dont le tensioactif, et l'agent complexant qui constituent le milieu d'extraction, notamment lorsque ces composés sont utilisées sous leur forme disponible dans le commerce.

Selon l'invention, le milieu d'extraction contient un composé tensioactif spécifique non halogéné, non fluoré, constitué uniquement d'atomes choisis parmi O, N, C et H.

Par composé tensioactif, au sens de l'invention, on entend généralement un composé abaissant la valeur de la tension interfaciale de référence eau/fluide $CO_2$ en dessous de 10 mN.m$^{-1}$.

Le ou les composés tensioactifs non fluoré(s) est (sont) choisi(s) parmi les copolymères blocs (séquencés) de poly(oxyde d'éthylène) POE et de poly(oxyde de propylène) POP tels que les copolymères di-blocs $(OE)_x$-$(OP)_y$, les copolymères tri-blocs $(OE)_x$-$(OP)_y$-$(OE)_x$ et les copolymères tri-blocs $(OP)_x$-$(OE)_y$-$(OP)_x$ où x et y sont des nombres entiers de 2 à 80, avec x différent de y, de tels copolymères sont disponibles auprès de la société BASf® sous la dénomination PLURONIC®.

Il s'est avéré que ces copolymères permettaient d'obtenir une efficacité maximale quant à la décontamination de substrats organiques.

Parmi les PLURONICS®, on peut citer les PLURONIC® PE 6100, PE 6200, PE 8100 et PE 10100 qui correspondent respectivement aux formules suivante

| Formule | PE 6100 $(EO)_2$-$(PO)_{31}$-$(EO)_2$ | PE 6200 $(EO)_5$-$(PO)_{34}$-$(EO)_5$ | PE 8100 $(EO)_3$-$(PO)_{42}$-$(EO)_3$ | PE 10100 $(EO)_4$-$(PO)_{59}$-$(EO)_4$ |
|---|---|---|---|---|

Ledit composé tensioactif non halogéné, notamment non fluoré, représente généralement de 0,001% . à 1%, par exemple de 0,01 à 0,04% en poids du milieu d'extraction.

Si le fluide dense sous pression a pour effet principal, grâce à ses propriétés de réaliser une extraction performante, le tensioactif permet quant à lui d'assurer la dispersion des contaminants et notamment des molécules polaires telles que le $PuO_2$ ou ses simulants $CeO_2$ et $Nd_2O_3$. Cette dispersion étant notablement favorisée par l'action mécanique.

Le tensioactif abaisse en effet l'énergie de surface entre les contaminants solides et le $CO_2$, et permet une dispersion fine de ces contaminants solides tels que les oxydes. On peut dire que le tensioactif est également anticoagulant en ce sens qu'il évite la redéposition des contaminants.

Enfin, le tensioactif spécifique selon l'invention peut également avoir une action « mouillante » qui a pour effet de décoller, décrocher les particules de contaminant du substrat. En effet, si le substrat est un solide présentant une forte énergie de surface, le $CO_2$ dense sous pression ne mouille pas sélectivement le substrat par exemple en polymère et les contaminants tels que les oxydes sont peu extraits.

Les tensioactifs cités ci-dessus sont des tensioactifs commerciaux, facilement disponibles et peu coûteux, ce qui rend le procédé selon l'invention économiquement très rentable.

Par ailleurs, les tensioactifs mis en oeuvre selon l'invention, sont d'un coût inférieur aux tensioactifs halogénés, notamment fluorés.

Le procédé met en oeuvre le caractère amphiphile des tensioactifs. La partie hydrophobe interagit avec le $CO_2$, ce qui solubilise le tensioactif dans le $CO_2$ dense, par exemple le $CO_2$ SC.

La partie hydrophile du tensioactif capte la particule solide de contaminant par liaison faible de type Van der Waals.

Dans le procédé selon l'invention, on procède différemment du mode d'action habituel des tensioactifs, en présence d'eau ; et les contaminants tels que les radioéléments sont en phase sèche, formée par le fluide tel que le $CO_2$ sec, les tensioactifs et le complexant sans eau. Une fois mises en suspension, les particules forment comme on l'a indiqué plus haut une sorte de « fumée » dans le fluide tel que le $CO_2$ SC, ce qui leur permet d'être entraînées en aval dans le procédé, par exemple vers le premier séparateur (voir plus loin). En effet, les tensioactifs se placent à l'interface particules de contaminants (par exemple oxyde métallique)/fluide (par exemple $CO_2$ SC) assurant par ce fait la dispersion des contaminants tels que les oxydes. La détente fait chuter le pouvoir solvant du $CO_2$ SC sans toutefois le faire revenir à l'état gazeux. Dans le procédé selon l'invention, on peut dans une forme de réalisation séparer les particules adsorbées seules des tensioactifs libres. Cela permet un recyclage de ces derniers. Cela a pour avantage de ne pas précipiter les tensioactifs non utilisés et de « surcharger » inutilement le résidu ultime à stocker.

Comme on l'a déjà indiqué plus haut, le milieu d'extraction mis en oeuvre dans le procédé selon l'invention contient également un agent complexant spécifique des contaminants choisi parmi le TBP, les éthers couronnes, l'oxyde de tributylphosphine, l'oxyde de triphénylphosphine, et l'oxyde de tri-n-octylphosphine. Généralement l'agent complexant représente de 0,001 à 1% en poids du milieu d'extraction.

Selon l'invention, le fluide à l'état dense sous pression est, généralement, mis en contact avec les pièces à nettoyer à une pression de 50 à 700 bars, de préférence de 80 à 300 bars et à une température de 15 à 200°C, de préférence de 20 à 80°C, mieux de 40 à 60°C.

Toutefois, selon l'invention, les plages de pression plus faibles que dans l'art antérieur peuvent être mises en oeuvre grâce à l'addition de l'agent complexant et surtout du cosolvant éventuel. Une plage particulièrement adéquate sera donc de 100 à 150 bars.

Le procédé selon l'invention présente, bien sûr, tous les avantages inhérents liés à l'utilisation, pour le nettoyage, la décontamination, d'un fluide dense sous pression, au lieu d'un solvant classique, notamment de type hydrocarbure halogène.

De préférence, le $CO_2$ dense sous pression est à l'état liquide et/ou supercritique, c'est-à-dire que le $CO_2$

dense est sous une pression et à une température, telle que le $CO_2$ est à l'état liquide et/ou supercritique, de préférence encore le $CO_2$ est à l'état supercritique.

Ainsi, de manière plus précise, dans le procédé selon l'invention, on met en oeuvre, par exemple, du $CO_2$ gazeux, dans les conditions normales de température et de pression, et on augmente sa masse volumique en augmentant sa pression. En modifiant également la température, on va se placer ainsi dans le domaine où le $CO_2$ se trouve à l'état dense et sous pression, de préférence, dans son état liquide et/ou supercritique. Ce domaine peut être facilement déterminé par l'homme du métier.

Selon l'invention, on peut faire varier, de manière contrôlée, les propriétés extractives du $CO_2$ en agissant sur les deux paramètres de température et de pression, tout en restant dans le domaine dense et sous pression, de préférence, le liquide et/ou supercritique du $CO_2$ : ainsi, l'augmentation de la pression et de la température augmentent la capacité de solubilisation, tandis que la diminution de la pression diminue la viscosité et augmente la diffusivité.

Ces deux caractéristiques permettent de maîtriser un fluide dont le pouvoir solvant est modulable, en termes de solubilisation, notamment des composés légers polluants, contaminants, ici uniquement particulaires, que l'on cherche à éliminer par le nettoyage, et en termes de cinétique d'extraction, notamment pour les polluants se trouvant dans la porosité du matériau, lorsqu'on procède au nettoyage de pièces poreuses.

Ainsi, selon l'invention, on peut, lors du traitement, effectuer des cycles de compression/décompression, de préférence, très rapides avec, par exemple, une amplitude de la variation de pression de 10 à 100 bars, et des intervalles de temps de 10 secondes à quelques minutes, par exemple, 10 minutes, le tout, par exemple, pendant une. à quelques heures; par exemple, 10 heures.

On augmente ainsi la pénétration du fluide solvant dans le matériau des pièces à nettoyer, ce qui a pour conséquence d'améliorer les performances- du nettoyage.

Des avantages du procédé de l'invention découlent, des caractéristiques spécifiques des fluides à l'état dense sous pression, en particulier, supercritiques. Ces avantages s'ajoutent et sont amplifiés par les actions mécaniques, ces actions mécaniques étant constituées par exemple par les effets combinés éventuels de l'agitation dans un panier ou tambour tournant, et de l'action éventuelle d'un jet à grande vitesse qui sont décrits en détail plus loin.

Les conditions de traitement du procédé de l'invention, notamment du fait de l'action mécanique, lorsque l'on fait en particulier appel à une agitation et/ou à l'action éventuelle d'un jet, sont nettement moins sévères que celles des procédés de l'art antérieur mettant en oeuvre des fluides denses sous pression, ce, qui entraîne, un gain énergétique considérable pour le procédé de l'invention.

En outre, on obtient une efficacité de nettoyage, décontamination voisine, voire supérieure, dans la plupart des cas, avec une durée de traitement beaucoup plus courte, par exemple, de 10 à 15 minutes, de nouveau cela se répercute de manière positive sur le coût énergétique et financier du procédé.

Les conditions plus douces, à savoir basses températures, basses pressions et durée de traitement faible du procédé de l'invention, sont en particulier dues à la combinaison de l'action du tensioactif non halogéné spécifique, du complexant particulier, selon l'invention, et de l'action mécanique, cette action mécanique étant par exemple une agitation causée par un tambour ou panier en mouvement, et/ou l'action éventuelle d'un jet à grande vitesse de fluide dense.

Le fluide utilisé dans le procédé selon l'invention est le dioxyde de carbone.

La faible viscosité du $CO_2$ à l'état dense, ses coefficients de diffusion élevés et sa très faible tension interfaciale permettent le nettoyage de pièces complexes par leurs formes et leurs caractéristiques physiques, en particulier lorsqu'on se trouve en présence de phénomènes d'adsorption, que ce soit à la surface ou au coeur de la pièce.

On peut citer, en outre, parmi les avantages, d'utiliser le $CO_2$, en remplacement des procédés classiquement mis en oeuvre, utilisant des solvants organiques

- un volume d'effluent résiduel quasi nul, strictement limité à la récupération des polluants extraits et au recyclage du $CO_2$ gaz épuré ;
- une économie importante, par exemple, que ce soit en terme de solvant, par l'absence de traitement ou de récupération d'effluents ou encore par l'utilisation de $CO_2$ peu onéreux ;
- une absence totale de toxicité, vis-à-vis des utilisateurs par rapport à des agents nettoyants, comme le trichloréthylène ou autres ;
- une modularité du pouvoir solvant de la molécule variable en fonction des conditions d'utilisation, c'est-à-dire de la pression et de la température, permettant de s'adapter à la nature des produits polluants, contaminants, à éliminer, extraire.

Autrement dit, les deux caractéristiques de pression et de température permettent de maîtriser un fluide dont le pouvoir solvant est modulable en termes de solubilisation, notamment des composés contaminants, polluants, indésirables, des pièces et de cinétique d'extraction.

La grande volatilisé du $CO_2$ aux conditions (pression et température) normales le caractérise comme un solvant sec, ne nécessitant pas d'étape de séchage, après nettoyage.

En outre, avec le substrat organique particulier traité par le procédé selon l'invention, on a constaté une interaction forte entre le $CO_2$ et le substrat organique par exemple le polymère organique tel que le PVC qui conduit à une modification de la structure du substrat par exemple un polymère en raison de la solubilisation d'une partie de ses composants.

Cet effet inattendu, spécifique aux substrats organiques améliore encore l'efficacité du procédé.

Selon l'invention, on soumet le substrat solide, et/ou le milieu d'extraction, simultanément à la mise en contact du substrat solide avec le milieu d'extraction, à une action mécanique.

Cette action peut être choisie par exemple parmi une ou plusieurs, parmi une agitation, une turbulence, un cisaillement, une action électromécanique et une action ultrasonique.

De préférence, selon l'invention, le milieu d'extraction peut comprendre en outre un composé, dit « cosolvant ».

L'addition d'un cosolvant au fluide, par exemple au $CO_2$ SC, permet d'augmenter la polarité de celui-ci.

L'addition d'un cosolvant au fluide dense, sous pression, permet d'obtenir une extraction totale des composés contaminants inorganiques solides, radioactifs, particulaires, autrement dit, des composés indésirables, à partir du substrat, des pièces à décontaminer.

Selon l'invention, ledit cosolvant est choisi, par exemple, parmi les alcools, par exemple, les alcools aliphatiques inférieurs de 1 à 5 C, tels que l'éthanol, le méthanol, le propanol, l'isopropanol, le butanol ; les cétones, telles que l'acétone ; les terpènes ; les cyclohexanes ; les hexanes ; le diméthylsulfoxyde (DMSO) ; et leurs mélanges.

Il est à noter que certains complexants tels que le TBP peuvent aussi jouer le rôle de cosolvant.

Selon l'invention, ledit cosolvant représente de 0,001 à 10% en poids, de préférence.de 0,01 à 1% en poids, de préférence encore de 0,02 à 1% en poids, mieux de 0,02 à 0,1% en poids du milieu d'extraction.

Le complexant et le cosolvant éventuel accroissent la solubilité du tensioactif dans le $CO_2$ ce qui conduit à un abaissement de la pression de travail particulièrement intéressante dans le contexte du procédé de l'invention opérant en milieu nucléaire.

On peut dire que le complexant a une affinité particulière vis-à-vis de la décontamination, tandis que le cosolvant agit avant tout dans le sens d'une diminution de la pression.

En outre, le complexant tel que le TBP (celui-ci pouvant jouer aussi le rôle de cosolvant) et le cosolvant tel que l'hexane ou le DMSO interagissent avec les matériaux organiques et la contamination du substrat traité selon l'invention notamment en éliminant une couche superficielle du substrat (qui concentre généralement une grande partie de la contamination du substrat) ou en dissolvant les additifs (par exemple les plastifiants comme les phtalatés dans le cas par exemple du PVC) présents dans ces matériaux organiques tels que des polymères. Cette interaction avec la couche superficielle du substrat peut contribuer à relever l'efficacité du procédé.

Un milieu d'extraction particulièrement préféré comprendra du $CO_2$ à l'état supercritique et :

- de 0,001 à 1% d'un tensioactif non fluoré émulsionnant tel qu'un PLURONIC® qui joue également le rôle de tensioactif anticoagulant,
- de 0,001 à 1% d'un cosolvant tel que l'éthanol ou le méthanol,
- de 0,001 à 1% d'un agent complexant tel que le TBP.

Tout type de substrat (ou pièce ou matrice) solide constitué d'un matériau organique peut être traité par le procédé de l'invention.

Il est à noter que du fait des conditions généralement « douces » de température et de pression du procédé de l'invention, des pièces thermiquement et/ou mécaniquement fragiles peuvent être traitées par le procédé de l'invention.

De même, le procédé de l'invention ne connaît pas de limitation quant à la taille et/ou au poids des pièces à traiter.

Il est à noter que le procédé selon l'invention permet de traiter des substrats notamment solides sans qu'il soit nécessaire de les diviser, fractionner auparavant par exemple avant de les introduire dans l'autoclave où est réalisée l'extraction.

En outre, le procédé selon l'invention permet de traiter les substrats sans qu'il y ait lieu de réaliser un autre traitement préalable.

L'ensemble de la décontamination peut être réalisée par le seul procédé de l'invention.

Les matériaux, qui peuvent être nettoyés, décontaminés par le procédé de l'invention, sont des matériaux solides, organiques tels que les tissus artificiels, synthétiques, ou naturels ; les polymères, les plastiques, les résines, les latex, les caoutchoucs, etc. ; et les matériaux composites comprenant plusieurs parmi lesdits matériaux.

Les pièces, substrats, traités par le procédé selon l'invention sont notamment des substrats, pièces utilisés dans l'industrie nucléaire et contaminés par des radioéléments tels que les gants de boîtes à gants et les ronds de gants.

Par « nettoyage », décontamination selon l'invention, on entend, de manière générale, l'élimination, l'extraction des composés polluants, contaminants indésirables, qui ne font pas normalement partie du matériau constitutif du substrat, des pièces.

Ces composés polluants, contaminants, à extraire peuvent se trouver aussi bien à la surface du substrat, de la pièce, mais ils peuvent aussi se trouver à l'intérieur du matériau du substrat, de la pièce, au sein même, par exemple, de sa porosité.

Le procédé, selon l'invention, a essentiellement pour but, de nettoyer les pièces de tout composé inorganique, radioactif, solide, en particule polluant, contaminant, se trouvant dans ou sur le substrat, les pièces.

Les composés, polluants, contaminants inorganiques, radioactifs, solides, particulaires sont notamment des composés polaires.

Ces contaminants peuvent être des métaux ou métalloïdes libres sous la forme de leurs isotopes radioactifs et/ou des composés de ces métaux ou métalloïdes radioactifs, ou encore des composés tels que les isotopes radioactifs de l'iode, le tritium et les composés organiques tritiés.

Les métaux sont notamment les métaux de transition, les actinides, et les lanthanides.

Ces métaux sont par exemple le strontium, l'argent, le césium, l'antimoine, le cobalt, le manganèse, le néodyme, le cérium, l'uranium, le plutonium, l'américium, le lanthane, et le thorium.

Par composés de métaux ou de métalloïdes, on entend tous les composés dérivés de ces métaux ou métalloïde, en particulier, leurs oxydes tels que $PuO_2$, $CeO_2$, $Nd_2O_3$, les oxydes de césium, d'américium, d'antimoine, de manganèse, de cobalt et d'argent, leurs sels, leurs dérivés organométalliques, etc.. Parmi les sels, on peut citer les nitrates, les sulfates les chlorures, etc.., hydratés ou non.

Il s'est avéré que le procédé selon l'invention était particulièrement efficace pour extraire, éliminer, des sels métalliques, des métaux et des oxydes tels que le $PuO_2$, à partir de matériaux organiques.

Le procédé pourra ainsi s'appliquer à la décontamination de gants ou de ronds de gants contaminés par $PuO_2$.

Les contaminants, polluants, sont sous forme de particules, il n'existe aucune limitation sur la taille et la forme de ces particules, il peut s'agir par exemple de « chips », copeaux, de métal ou autre, de formes totalement aléatoires. La taille de ces particules peut être par exemple inférieure ou égale à 100 $\mu$m ; de préférence de 10 nm à 100 $\mu$m.

Les gammes de température et de pression mises en oeuvre au cours de l'opération de nettoyage peuvent varier, à la condition que le fluide reste toujours un fluide dense sous pression, de préférence, dans un état liquide et/ou supercritique, de même, comme on l'a indiqué plus haut, on peut effectuer des cycles de compression/décompression.

Ces gammes de température et de pression ont déjà été mentionnées ci-dessus.

De telles conditions peuvent être maintenues pendant toute la durée du procédé, ou bien seulement au début du procédé de nettoyage ou de traitement, où de telles conditions correspondant à une forte masse volumique et à une température élevée - le phénomène prépondérant étant la dispersion - permettent d'extraire, d'éliminer, très rapidement les composés extérieurs à la matrice formant la pièce.

De manière générale, la durée du traitement de nettoyage, c'est-à-dire la durée pendant laquelle la ou les pièce(s) à nettoyer est laissée en contact avec le fluide dense sous pression, est de 1 ou quelques minutes, par exemple, 10 minutes, à une ou quelques heures, par exemple, 5 heures, en fonction du débit du fluide et de la quantité de matériaux à traiter. De nouveau, selon l'invention, cette durée est faible, du fait de l'action mécanique à laquelle est soumise le substrat, en particulier lorsque le substrat est en contact avec un fluide turbulent par exemple agité par des pales ou hélices, ou bien lorsque l'on réalise une agitation des substrats dans un tambour ou panier, et éventuellement lorsqu'on soumet les substrats à l'action d'un jet de fluide à grande vitesse.

Après quelques minutes, c'est-à-dire, par exemple, après 5 minutes, une fois les pièces soumises aux conditions de pression et de température du procédé, l'extraction, l'élimination, s'effectue de façon très rapide, grâce à un régime diffusif très important.

Après avoir atteint l'équilibre, par exemple après de 5 à 60 minutes, on peut considérer que l'extraction, l'élimination des polluants, contaminants, est totale avec une efficacité quasi totale, par exemple de plus de 85%, de préférence de plus de 99,9 %.

Les efficacités d'extraction, d'élimination des contaminants, polluants, sont, dans tous les cas, très élevés, quels que soient les polluants, contaminants inorganiques.

Le taux de solvant utilisé, c'est-à-dire le poids de fluide dense - solvant, de préférence, liquide et/ou supercritique, mis en oeuvre par rapport à la surface de la ou des pièce(s) à nettoyer, peut varier de 0 à 100 kg de fluide/$cm^2$ de pièce (s). Selon un avantage supplémentaire de l'invention, le taux de solvant utilisé est nettement inférieur, lorsqu'on soumet le substrat à une action mécanique par exemple lorsque l'on réalise une agitation du substrat, et qu'on le soumet à des jets de fluide $CO_2$.

Ainsi, de manière avantageuse, les pièces, substrats à nettoyer peuvent être placées dans un tambour ou panier perforé en mouvement, par exemple animé d'un mouvement de rotation, à l'intérieur d'une enceinte sous pression contenant le fluide $CO_2$ dense sous pression.

Le substrat, les pièces, peuvent être soumis, en outre, simultanément avantageusement à l'action d'un jet à grande vitesse du fluide $CO_2$ dense.

Le procédé, selon l'invention, associe un ou plusieurs effets ou actions mécaniques à la simple mise en contact des pièces polluées, contaminées, avec le fluide $CO_2$ notamment dense sous pression.

Ces effets mécaniques sont, par exemple respectivement, l'effet d'agitation, de brassage dû au mouvement du panier ou du tambour dans lequel se trouvent les pièces et, éventuellement d'autre part, l'effet de décapage dû à l'impact des jets de fluide dense à grande vitesse sur les substrats, les pièces. Ce jet à grande vitesse permet avantageusement de parfaire le nettoyage, la décontamination et d'éliminer toute contamination résiduelle des pièces.

La combinaison de l'action du ou des jet(s), et de l'agitation due au mouvement du panier tournant, résulte en un accroissement inattendu des performances de nettoyage par un fluide dense sous pression par rapport aux procédés de l'art antérieur.

Il se produit en outre une synergie entre l'énergie mécanique fournie par l'agitation et/ou les jets sous pression et l'effet physicochimique du tensioactif.

Le tambour ou panier peut être animé d'un mouvement de rotation; le sens de rotation pouvant être, éventuellement, périodiquement inversé.

Le tambour ou panier tournant peut aussi être animé d'un mouvement pendulaire.

La possibilité d'inverser le sens de rotation ou d'imprimer un mouvement pendulaire, par exemple, en fonction du type de pièce à nettoyer, est précisément un des avantages apportés par la mise en mouvement du tambour ou panier tournant, à l'aide d'un arbre en prise directe.

Dans le procédé selon l'invention, par jet à grande vitesse, on entend généralement une vitesse du fluide de 1 à 500 m/sec., qui permet d'assurer un décapage optimal de la pièce soumise à l'action de ce jet, c'est-à-dire heurtée par ce jet.

Lorsque le mouvement du panier ou tambour tournant est un mouvement de rotation, la vitesse de rotation est généralement de 5 à 500 tours par minute.

Il est possible, selon l'invention, de maintenir des vitesses élevées, même pour des quantités et des poids importants de pièces à nettoyer.

Une autre manière de soumettre le substrat et/ou le milieu d'extraction à une action mécanique est de placer le substrat dans une enceinte verticale remplie du milieu d'extraction, un ou plusieurs agitateurs en forme de pales, hélices, etc..., par exemple entraînés par un arbre vertical, qui agitent, brassent ledit milieu d'extraction.

En outre, avantageusement, on peut soumettre lie substrat et/ou le milieu d'extraction à l'action d'ultrasons.

Avantageusement, suite au nettoyage, à l'extraction par le fluide $CO_2$ dense sous pression, le $CO_2$, le composé tensioactif non halogéné, l'agent complexant et le cosolvant éventuel d'une part, et les contaminants inorganiques, radioactifs, solides en particles d'autre part ; ou bien le $CO_2$ d'une part, et le composé tensioactif non halogéné, l'agent complexant, et le cosolvant éventuel, et les contaminants, inorganiques, radioactifs, solides, en particules d'autre part, sont séparés par une ou plusieurs étapes de séparation physico-chimique ; et le fluide $CO_2$, le composé tensioactif non halogéné, l'agent complexant, et le cosolvant éventuel, sont recyclés, reconditionnés ensemble, ou bien le fluide $CO_2$ est recyclé, reconditionné seul, vers l'étape de nettoyage, de décontamination, vers l'enceinte sous pression.

La ou lesdites étapes de séparation physicochimiques peuvent être réalisées dans un ou des séparateurs cyclones.

Ces étapes de séparation concernent le tensioactifs, le complexant et le cosolvant éventuel, et les particules de contaminants dispersées dans le fluide.

De manière classique, les premières étapes de séparation peuvent consister en une diminution de la masse volumique du fluide par une série de détentes et réchauffages successifs, afin de se rapprocher de l'état gazeux ou bien on peut réaliser une ou plusieurs séparations isobares et à température constante.

Le pouvoir « solvant » est directement lié à la densité du fluide. Plus le fluide tel que le $CO_2$, supercritique, est dense, plus il présente de pouvoir solvant notamment vis-à-vis des tensioactifs. Ainsi, dans les étapes de séparation de particules, le-pouvoir solvant du fluide diminue et l'on récupère ainsi une partie des extraits précédemment solubilisés, lors de l'étape de nettoyage ou d'extraction.

Ainsi, le procédé, selon l'invention, de nettoyage, de décontamination de pièces, de substrats permet de récupérer physiquement en fin de traitement, d'une part, les substrats, pièces nettoyées, d'autre part, des produits indésirables, dont la manipulation, le traitement ou l'élimination peut se faire de manière spécifique et donc aisément maîtrisée, tandis que le gaz ou fluide peut avantageusement être recyclé avec le tensioactif et les autres additifs éventuels, afin de réaliser une nouvelle extraction ou nettoyage.

Avant le recyclage, le procédé peut comprendre, entre autres, une étape de distillation du fluide dense permettant une épuration quasi totale, conformément au document FR-Al-2 586 938 (US-A-4 824 570).

De ce fait, le procédé de nettoyage ou d'extraction peut être réalisé en circuit fermé ou en boucle ce qui signifie, de manière avantageuse, que grâce à une charge initiale et constante de fluide, tel que $CO_2$, on peut progressivement éliminer dés pièces, les composés contaminants, polluants indésirables.

De manière plus précise et suite au procédé de nettoyage, proprement dit, le procédé selon l'invention comprend avantageusement une ou plusieurs étapes, par exemple, jusqu'à 3 étapes de séparation physicochimiques, dans lesquelles on diminue la masse volumique du $CO_2$ par exemple par une série de détentes et de réchauffages successifs au nombre, de préférence, de 1 à 3, afin de se rapprocher de l'état gazeux et de l'atteindre.

Les conditions régnant dans ces étapes successives seront, par exemple, les suivantes . 90 bars et 50°C, 70 bars et 40°C et 50 bars et 40°C.

On récupère ainsi les particules solides de contaminants précédemment dispersés dans le $CO_2$ lors de l'étape de nettoyage ou d'extraction.

Les particules récupérées peuvent être spécifiquement traitées, détruites, ou immobilisées dans des matrices adéquates, dans le cas d'oxydes radioactifs tels que le $PuO_2$.

Le gaz obtenu à l'issue de la séparation (qui contient le tensioactifs, le complexant et le cosolvant éventuel) est, de préférence, recyclé vers l'étape de nettoyage, décontamination, extraction, où il est reconditionné, afin de le remettre dans des conditions de température et de pression pour qu'il soit dans un état supercritique, le gaz peut ainsi être tout d'abord refroidi à la pression atmosphérique, stocké sous forme liquide, puis réchauffé et comprimé avant d'être envoyé dans le procédé de nettoyage, de décontamination ou d'extraction, proprement dit.

Avant son recyclage, le fluide, par exemple gazeux, est, de préférence, purifié par une ou plusieurs étapes d'adsorption et/ou de liquéfaction et/ou (re)distillation. L'adsorption peut être réalisée, par exemple, par du charbon actif ou tout autre agent adsorbant, tel qu'une zéolithe et la (re) distillation est, de préférence effectuée à l'aide du dispositif spécifique décrit dans le document FR-A1-2 586 938. Cette purification effectuée par adsorption, par exemple, par passage sur charbon actif et/ou par distillation et/ou par liquéfaction permet d'éliminer les traces de produits organiques-volatils et/ou non solubles dans le $CO_2$ et entraînées mécaniquement par celui-ci lors des étapes précédentes de séparation.

En effet, une purification poussée du gaz est généralement nécessaire, sous peine de réduire grandement les performances d'extraction et/ou de nettoyage.

Au terme de la décontamination, c'est-à-dire lorsque l'on estime que les contaminants, polluants ont été éliminés au degré voulu, on procède, à une étape final, de détente, dépressurisation ou décompression de l'enceinte sous pression avec les pièces nettoyées qui s'y trouvent.

Un dispositif et une installation pour la mise en oeuvre du procédé selon l'invention sont décrits notamment dans les documents FR-A-2 815 559 ; FR-A-2 754.464 et FR-A-2 798 879 à la description desquels on pourra se référer.

L'invention sera mieux comprise à la lecture de la description suivante, faite en référence aux dessins joints, dans desquels

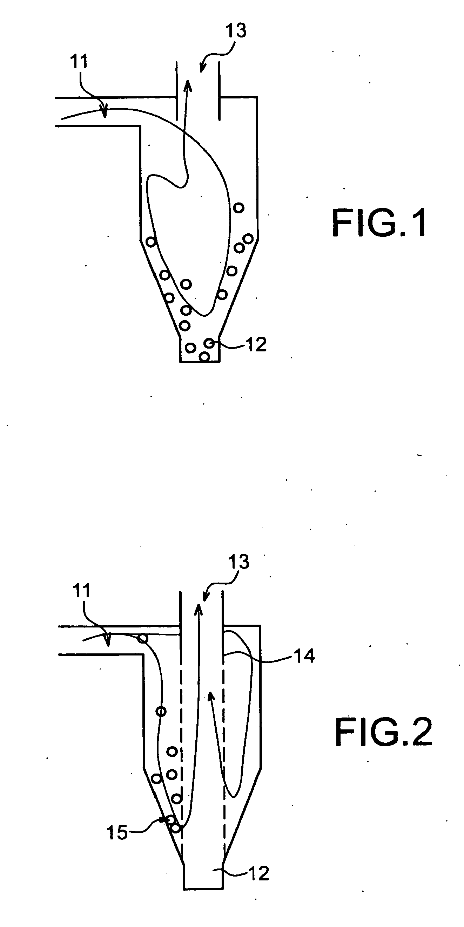

- la figure 1 représente de manière schémtique une vue latérale en coupe d'un des séparateurs cyclones qui peuvent être utilisés dans une installation pour la mise en oeuvre du procédé selon l'invention, ce séparateur permettant la mise en oeuvre de la séparation selon un premier mode de réalisation de celle-ci ;
- la figure 2 représente de manière schématique, une vue latérale en coupe d'un des séparateurs cyclones qui peuvent être utilisées dans une installation pour la mise en oeuvre du procédé selon l'invention, ce séparateur permettant la mise en oeuvre de la séparation selon un second mode de réalisation de celle-ci avec une paroi de séparation en matériau fritté ;

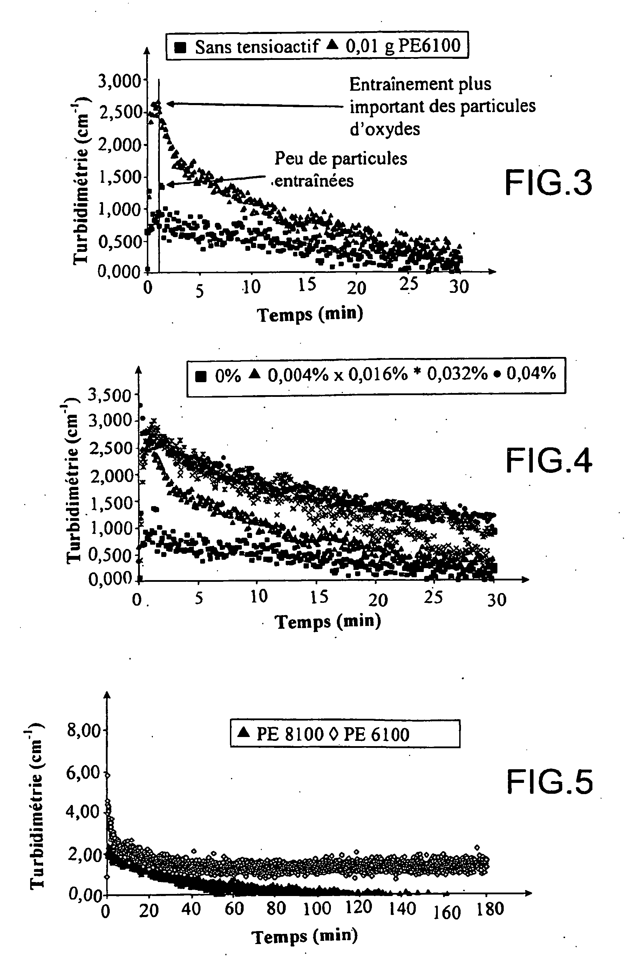

- la figure 3 est un graphique qui donne la turbidité (en $cm^{-1}$) en fonction du temps (min) lors d'essais (Exemple 1) de mise en dispersion de poudres d'oxyde de cérium ($CeO_2$) réalisés avec du $CO_2$ sans addition de tensioactif (points ■) et avec du $CO_2$ additionné de PLURONIC® PE 6100 à raison de 0,1 g/kg de $CO_2$ (points ▲) ;
- la figure 4 est un graphique qui donne la turbidité (en $cm^{-1}$) en fonction du temps (en min) lors d'essais (Exemple 2) de mise en suspension de poudre d'oxyde de cérium avec du $CO_2$ comprenant diverses proportions de PLURONICS® PE 6100.
Les essais sont réalisés avec addition de 0 (■) ; 0,004% (▲); 0, 016% (X), 0, 032% (*); et 0,04% (●) en masse de PLURONIC® PE 6100 au $CO_2$ supercritique ;
- la figure 5 est un graphique qui donne la turbidité (en $cm^{-1}$) en fonction du temps (en min) lors d'essais (Exemple 3) de mise en suspension de poudre d'oxyde de cérium avec du PLURONIC® PE 8100 ou du PLURONIC® PE 6100.

Les points - concernent l'expérience avec le PLURONIC® PE 8100 et les points ◊ concernent l'expérience avec le PLURONIC® PE 6100.

En fait, l'installation selon l'invention est sensiblement analogue à une installation classique pour le traitement, la décontamination ou le nettoyage de pièces par un fluide dense sous pression, par exemple supercritique. En outre, l'installation comporte. éventuellement certaines adaptations dues aux caractéristiques spécifiques du procédé mis en oeuvre selon l'invention touchant notamment à l'absence d'eau et à la mise en oevure d'un tensioactif spécifique, d'un complexant spécifique et éventuellement d'un cosolvant.

L'installation, selon l'invention, possède donc tous les avantages inhérents au procédé selon l'invention, tels qu'ils ont déjà été indiqués, ainsi éventuellement que les avantages- inhérents, au dispositif tel que celui du document FR-A-2 815 559, ou à un dispositif équivalent, disposé par exemple verticalement.

L'installation comprend en tant qu'élément central une enceinte sous pression extracteur, ou autoclave.

Les particules solides de composés polluants, contaminants, extraites des substrats, pièces, placées dans l'autoclave, sont mises en suspension et forment une sorte de « fumée » dans le $CO_2$ dense sous pression par exemple supercritique qui est ensuite évacuées de préférence, par un orifice se trouvant dans la partie supérieure de l'autoclave par exemple sur la paroi latérale de celui-ci ou dans le couvercle supérieur.

Cette fumée est envoyée vers des moyens de séparation reliés à l'extracteur ou autoclave et comprenant, par exemple, un ou plusieurs par exemple trois séparateurs de type cyclone reliés en série.

La détente à laquelle est soumis le fluide s'opère généralement à température ambiante.

Dans le premier ou dans chacun des séparateurs, se produit une séparation ou démixtion, d'une part, des particules solides de composés inorganiques extraits, éventuellement liées au tensioactif, adsorbées avec le tensioactif et, d'autre part, d'un fluide par exemple d'un gaz, tel que du $CO_2$ qui contient éventuellement le tensioactif libre dan le cas où celui-ci n'est pas lié aux particules.

Les particules inorganiques solides de composés extraits des pièces sont soutirées éventuellement avec le tensioactif, par exemple,à la base des séparateurs, et récupérées, puis éventuellement soumises à de nouvelles opérations de séparation, d'extraction ou de purification, par exemple, centrifugation, décantation ou extraction liquide/ liquide, ou détruits.

La séparation ou démixtion dans chacun des séparateurs de type cyclone peut intervenir selon deux modes de réalisation différents.

Dans un premier mode de réalisation, on sépare d'une part la contamination, à savoir les particules solides de composés inorganiques, radioactifs, extraits tels que le $PuO_2$, avec le composé tensioactif non halogéné solubilisé qui précipite avec la contamination, et d'autre part, le fluide $CO_2$.

Dans un second mode de réalisation de la séparation, on sépare d'une part la contamination, à savoir les particules solides de composés inorganiques, radioactifs tels que le $PuO_2$, et d'autre part, une phase de fluide $CO_2$, le composé tensioactif non halogéné se trouvant dans ladite phase de fluide $CO_2$, généralement à l'état supercritique, et pouvant être ainsi recyclé.

La figure 1, représente de manière schématique le fonctionnement d'un des séparateurs dans le cas où l'on opère la séparation selon le premier mode de réalisation de celle-ci avec précipitation du tensioactif.

La fumée de fluide $CO_2$ et de particules solides avec le tensioactif adsorbé, qui forment une seule phase est introduite dans ledit cyclone par la canalisation (11). Les particules solides sont séparées par un effet conjugué de vortex et de diminution de la pression et de la densité du fluide qui perd ainsi l'essentiel de son pouvoir solvant, voire tout son pouvoir solvant, s'il redevient gazeux. Les particules, avec le tensioactif qui précipite, sont évacuées par l'orifice inférieur (12) tandis que le fluide $CO_2$ épuré s'échappe par l'orifice supérieur (13). Les particules de contaminants par exemple d'oxydes métalliques sont récupérées en présence de tensioactif. Dans ce mode de réalisation, les conditions de pression et de température influent sur la séparation car elles contrôlent le pouvoir solvant du fluide $CO_2$, et par conséquent la précipitation du tensioactif. Selon le procédé de l'invention dans ce mode de réalisation de la séparation, on fait en sorte de bien contrôler la diminution de la pression et de densité.

De manière idéale, en particulier, dans le premier cyclone, la densité du fluide $CO_2$ doit permettre de garder en phase dense par exemple supercritique, les tensioactifs tout en relarguant les particules seules.

Un second voire un troisième cyclone permettent de piloter la fin de la détente du fluide $CO_2$ afin de revenir à la pression d'entrée du gaz.

Lorsque l'on procède à la séparation ou démixtion selon le second mode de réalisation de celle-ci, les particules de contaminants sont séparées indépendamment du tensioactif qui ne précipite pas avec lesdites particules.

En effet, dans le procédé de l'invention, comme les particules de contaminants, tels que le $PuO_2$, ne sont à aucun moment solubilisées dans le fluide supercritique, il est possible, de séparer celles-ci indépendamment du tensioactif. Il suffit pour cela de réaliser une séparation sans chute de pression et de température, une séparation isobare, ce qui permet aussi au tensioactif de rester en phse supercritique, à savoir en phase $CO_2$ supercritique. La séparation des particules de contaminant, par exemple de $PuO_2$, peut se faire par effet vortex ou bien par filtration à l'aide de tout moyen adéquate : par exemple une paroi, un matériau fritté.

La séparation selon le second mode de réalisation peut être mise en oeuvre dans un appareil analogue à celui décrit sur la figure 1 mais dans lequel la pression et la température sont maintenues constantes, la séparation des particules de contaminant se faisant dans cet appareil sous l'effet d'un simple effet vortex. Bien entendu, dans le cas où l'appareil de la figure 1 est mis en oeuvre selon le second mode de réalisation de la séparation, on évacue par l'orifice inférieur (12) du séparateur cyclone uniquement des particules de contaminant exemptes de tensioactif, tandis que par l'orifice supérieur (13) s'échappe non plus du fluide pur mais du fluide, tel que du $CO_2$, dans lequel sont solubilisés les tensioactifs.

La figure 2 représente un séparateur pour la mise en oeuvre de la séparation selon le second mode de réalisation de celle-ci dans lequel la séparation des particules solides de contaminant est réalisée par l'intermédiaire d'une paroi (14) en un matériau fritté tel que l'acier inoxydable.

Cette paroi (14) se présente sous la forme d'un cylindre situé dans le prolongement de l'orifice supérieur (13) du séparateur et s'étendant jusqu'à l'orifice de sortie inférieur (12) du séparateur cyclone. Il est défini ainsi une zone de séparation fluide solide (15) au voisinage de la bae de ladite paroi (14) en matériau fritté.

L'appareil de la figure 2 fonctionne sans chute de pression et de température.

Dans la configuration où la séparation cyclonique est effectuée selon le second mode de réalisation le tensioactif est présent dans la phase $CO_2$ supercritique en sortie de séparateur. La pression reste élevée et constante : on opère de manière isobare et à température constante. Cette configuration selon le second mode de réalisation permet de travailler avec des pompes classiques pour l'ensemble des séparateurs, fonctionnant avec du fluides tel que du $CO_2$ liquide. Il est possible dans un second séparateur, voire un troisième séparateur de faire une détente pour séparer le tensioactif et d'obtenir du fluide, $CO_2$, gazeux.

Dans le cas où le tensioactif serait recyclé directement en tête de procédé, des compresseurs devront être utilisés pour permettre la circulation dans la boucle supercritique. En effet, la pression reste alors constante (et donc élevée) pour garder le tensioactif solubilisé en tout point du procédé.

L'invention va maintenant être décrite en référence aux exemples suivants, donnés à titre illustratif et non limitatif.

Exemples

Dans les exemples 1 à 3 qui suivent, on a réalisé des essais de dispersion de poudres d'oxyde de cérium ($CeO_2$) avec différents tensioactifs Pluronic et pour différentes concentrations de tensioactif.

Principe de l'expérience : on met en agitation un système composé du $CO_2$, du tensioactif éventuel puis on arrête l'agitation. On enregistre la turbidité du système en fonction du temps. La diminution de la turbidité traduit la sédimentation des particules. Plus les tensioactifs sont efficaces et plus le retour à l'équilibre est lent, traduisant un maintien en suspension plus efficace des particules.

Dans tous les exemples, on met en oeuvre une agitation mécanique à 1000 tours par minute obtenue par rotation d'un agitateur à pales.

**Exemple 1 : Comparaison du système sans tensioactif et avec présence de Pluronic® PE 6100 à raison de 0,1 g/kg de $CO_2$.**

Les résultats obtenus sont illustrés sur la figure 3. Les points ■ concernent l'expérience sans tensioactif tandis que les points ▲ concernent l'expérience avec addition de PLURONIC® PE 6100 à raison de 0,1 g/kg de .$CO_2$.

On constate que l'ajout de tensioactif conformément à l'invention favorise une mise en suspension plus importante de la poudre d'oxyde de cérium, un entraînement plus important des particules d'oxyde (turbidité initiale plus élevée) et retarde considérablement la sédimentation des particules (turbidité décroissant lentement). En l'absence de tensioactif, peu de particules sont entraînées.

**Exemple 2 : Comparaison de différentes concentrations de tensioactif (PLURONIC® PE 6100)**

Dans cet exemple, on effectue des expériences avec respectivement addition de 0 (points ■) ; 0,004% (points ▲) ; 0,016% (points X) ; 0,032% (points *) et 0,04% (points ●) en masse de PLURONIC® PE 6100 au $CO_2$ supercritique.

Sur la figure 4, on constate que l'efficacité de la remise en suspension est améliorée par l'augmentation de la concentration. Une concentration de l'ordre de 0,04 % en masse semble optimale.

**Exemple 3 : Comparaison des tensioactifs PLURONIC® PE 6100 et PE 8100**

Dans cet exemple, on effectue des expériences avec respectivement du PLURONIC® PE 6100 et du PLURONIC® PE 8100 à raison de 0,04% en masse, les résultats obtenus sont illustrés sur la figure 5. Les points ▲ concernent l'expérience avec le PE 8100 et les points ◊ concernent l'expérience avec le PE 6100.

On constate que pour cette expérience, la valeur de la turbidité se stabilise durablement dans le cas du PE 6100, traduisant la stabilisation complète d'une classe de particules (les plus petites en taille). Le PE 6100 est donc plus efficace ce qui est expliqué par une meilleure solvatation des motifs PPO dans le $CO_2$ SC par rapport au PE 8100.

Dans les exemples 4 à 6 qui suivent, on a réalisé la décontamination d'échantillons contaminés par de la poudre d'oxyde de cérium par le procédé de l'invention, en utilisant une installation analogue à celle décrite dans les documents mentionnés plus haut, le fluide étant du $CO_2$ dense, sous pression.

**Exemple 4 : Essais sur des échantillons de polyéthylène**

Des échantillons de polyéthylène en forme de disques environ 4 cm de diamètre, surface totale recto-verso 30,4 $cm^2$ sont préparés en les enduisant de poudres d'oxyde de cérium à raison d'environ 20 mg par échantillon. La différence de masse des échantillons est mesurée avant et après essai.

L'efficacité de la décontamination est donnée par la formule suivante :

$$Efficacité \ \% = \left( 1 - \frac{masse \ de \ l'échantillon \ après \ nettoyage}{masse \ de \ l'échantillon \ avant \ nettoyage} \right) x \ 100$$

Les résultats obtenus sont regroupés dans le Tableau 1 suivant.

**TABLEAU 1**

| Essai | Tensioactif | Co-solvant ou complexant | Efficacité |
|-------|-------------|--------------------------|------------|
| 1 | PE 8100 0,04% | | 91% |
| 2 | PE 8100 0,06% | Propanol 0,5% | 90% |
| 3 | PE 8100 0,04% | Propanol 1% | 87% |
| 4 | | TBP 0,5% | 86% |
| 5 | | Propanol 0,5% | 93% |
| NB : Le TBP joue à la fois le rôle de complexant et de cosolvant. | | | |

Les résultats obtenus montrent une excellente efficacité.

**Exemple 5 : Influence des cosolvants**

Pour mettre en évidence l'effet dû aux cosolvants, des essais complémentaires ont été réalisés sur des gants verts en polyuréthane contaminés par du $CeO_2$ à raison de 20 mg par échantillon.

On obtient les résultats suivants :

**TABLEAU 2**

| N° essai | % masse PLURONIC® PE 8100 | % Propanol | Efficacité % |
|----------|---------------------------|------------|--------------|
| 1 | 0,04 | 0 | 31 |
| 2 | 0,04 | 0,5 | 96 |

L'ajout de cosolvant, ici de type propanol, permet d'augmenter significativement l'efficacité du procédé.

**Exemple 6 : Essai sur des échantillons en PVC**

On réalise dans cette expérience la décontamination de pièces en PVC (disques environ 4 cm de diamètre, surface totale recto-verso 30,4 cm$^2$) contaminées par du $CeO_2$ à raison d'environ 20 mg par échantillon. La différence de masse des échantillons est mesurée avant et après essai.

Dans ce cas on met en évidence à la fois le gain dû au complexant, (ici le TBP qui joue aussi le rôle de cosolvant) et à l'interaction du $CO_2$ avec le PVC. En effet, l'interaction forte du $CO_2$ et du PVC conduit à une modification de la structure du polymère en raison de la solubilisation d'une partie de ses composants

Dans le tableau 3 ci-dessous on constate l'amélioration liée à l'ajout du TBP par rapport à un essai de référence sans TBP

**TABLEAU 3**

| N° essai | %masse PE 8100 | % TBP | Amélioration Efficacité % |
|----------|----------------|-------|---------------------------|
| 1 | 0,04 | 0 | référence |
| 2 | 0,04 | 0,5 | 15 % par rapport à l'essai de référence |

**Exemple 7 : Dans cet exemple on montre l'effet lié à la combinaison agitation mécanique et tensioactif**

Dans cet exemple, on montre l'efficacité du nettoyage induit par l'utilisation conjointe : de $CO_2$ comme solvant, d'un tensioactif spécifique non halogéné, et des effets mécaniques provoqués par une agitation à l'aide d'un agitateur à pales à 1500 tr/minutes.

La durée du cycle de nettoyage, décontamination est de 30 minutes. L'expérimentation est réalisée sur des plaques d'acier inoxydable rectangulaires (5 x 5 cm), préalablement tarées et dont une face est enduite mécaniquement par frottement d'un contaminant. Les pièces sont contaminées par 5g de $CeO_2$ par kg.

Les résultats de cet exemple peuvent toutefois être transposés à la décontamination de substrats organiques.

La masse surfacique de contaminant est déterminée par pesée avant et après nettoyage par $CO_2$. L'efficacité du nettoyage en pourcentage est obtenu par la formule suivante :

$$Efficacité\ \% = \left( 1 - \frac{masse\ de\ l'échantillon\ après\ nettoyage}{masse\ de\ l'échantillon\ avant\ nettoyage} \right) x\ 100$$

Dans une première expérience, on réalise la décontamination, le nettoyage d'une éprouvette conformément au procédé de l'invention, en mettant en oeuvre du $CO_2$ à 250°C et 40 bar auquel on a ajouté un tensioactif non halogéné qui est le PLURONIC® PE 8100 $(OE)_3$-$(OP)_{42}$-$(OE)_3$ disponible auprès de la société BASF®, à raison de 100 mg de PE 8100 dissous dans 2 g d'éthanol.

Le milieu d'extraction dans lequel sont plongées les pièces est agité à raison de 1500 tr/minute.

A des fins de comparaison, on réalise :

- le nettoyage d'une plaque contaminée par $CeO_2$ dans les mêmes conditions, mais par simple contact entre celle-ci et du $CO_2$, sans addition de tensioactif, et sans agitation,
- le nettoyage d'une plaque contaminée dans les mêmes conditions, avec addition d'un tensioactif qui est le PE 8100 à raison de 40 mg, mais sans agitation.

Le tableau 4 présente cette comparaison, avec la contamination surfacique et les conditions opératoires.

**TABLEAU 4**

| Tensioactif | Pression | Température | Agitation | Efficacité |
|---|---|---|---|---|
| Sans | 250 bar | 40°C | Non | 0% |
| PE 8100 (40 mg) | 250 bar | 40°C | Non | 0% |
| PE 8100 + éthanol | 250 bar | 40°C | 1500 tr/min | 85% |

Le Tableau 4 montre l'efficacité considérablement plus importante du procédé de l'invention combinant fluide supercritique, tensioactif spécifique non halogéné et action mécanique (agitation) par rapport à un procédé où l'on ne réalise pas d'agitation bien que l'on mette en oeuvre un tensioactif non halogéné, et par rapport à un procédé ne mettant en oeuvre ni agitation, ni tensioactif non halogéné, notamment non fluoré.

REFERENCES

1. Tueur, A. (1997). Thèse de Doctorat, "Etude et optimisation de la solubilité de b-dicétonates métalliques dans le dioxyde de carbone supercritique : application à l'extraction des ions cobalteux et uranyles présents dans les sols", Montpellier II.

2. Fox, R. V. and B. J. Mincher (2003). "SFE of plutonium and americium from soil using beta diketones and TBP complexants." ACS Symposium Series 860: 36-49.

3. Murzin, A. A., V. A. Babain, A. Y. Shadrin, V. A. Kamachev, V. N. Romanovski, V. A. Starchenko, S. V. Podoinistyn, Y. A. Revenko, M. V. Logunov and N. G. Smart (2002). "Deactivation in sub and supercritical carbon dioxide." Radiochemistry 44 (4) : 410-415.

4. Murzin, A. A., V. A. Babain, A. Y. Shadrin, V. A. Kamachev, S. A. Strelkov, R. N. Kiseleva, D. N. Shafikov, S. V.

Podoinistyn and D. N. Kovalev (2003). "Interaction of hexafluoroacetylacetone with metal and their alloys in the medium of supercritical carbon dioxide in the processes of equipment decontamination." Radiochemistry 45(2): 131-134.

5. Miura, S., M. Kamiya, K. Nomura, T. Koyama, S. Ogumo, T. Shimada, Y. Mori, Y. Enokida and I. Yamamoto (2003). Extraction of uranium and plutonium from irradiated fuel in Super-DIREX reprocessing system. 2nd International Symposium on Supercritical Fluid Technology for Energy and Environment Applications, Nagoya, Japon.

6. Toews, K. L., N. G. Smart and C. M. Wai (1996). "Complexation and transport of uranyl nitrate in supercritical carbon dioxide with organophosporus reagents." Radiochimica Acta 75: 179-184.

7. Lin, Y., C. M. Wai, F. M. Jean and R. D. Brauer (1994). "Supercritical fluid extraction of thorium and uranium ions from solid and liquid materials with fluorinated b diketones and tributyl phosphate." Environmental Science and Technology, 28: 1190-1193.

8. Lin, Y., N. G. Smart and C. M. Wai (1995). "Supercritical fluid extraction of uranium and thorium from nitric acid solution with organophosphorus reagent." Environmental Science and Technology 29: 2706-2708.

9. Murzin, A. A., V. A. Babain, A. Y. Shadrin, I. Smirnov, V. N. Romanovsky and M. Z. Muradymov (1998). "Supercritical fluid extraction of uranium and transuranium and rare earth elements from surface of solids." Radiochemistry 40(1): 47-51.

10. Hutton, B. R., J. M. Perera, F. Grieser and G. W. Stevens (1999). "Investigation of AOT reverse microemulsions in supercritical carbon dioxide." Colloids and surfaces A: Physiochemical and Engeenering Aspects 146: 227-241.

11. Hutton, B. R., J. M. Perera, F. Grieser and G. W. Stevens (2001). "AOT reverse microemulsions in SC CO2 - a further investigation." Colloids and surfaces A: Physiochemical and Engeenering Aspects 189: 177-181.

12. Liu, J. C., B. X. Han, J. L. Zhang, G. Z. Li, X. Zhang, J. Yang and B. Dong (2002). "Formation of water in CO2 microemulsions with non fluorous surfactant Ls-54 and solubilisation of biomacromolecules." Chem. A: Eur.J. 8: 1356-1360.

13. Liu, J. C., J. L. Zhang, B. X. Han, G. Z. Li and G. Y. Yang (2002). "Study on the phase behavior of supercritical CO2/Dynol-604/Water System and solubilisation of methyl orange in the microemulsion." Chinese Chemical letters 13(1): 87.

14. Liu, J., J. Zhang, T. Mu, B. X. Han, G. Z. Li, J. S. Wang and B. Dong (2003). "An investigation of non fluorous surfactant Dynol 604 based water-in-CO2 reverses micelles by small angle X-ray scattering." Journal of Supercritical fluids 26: 275-280.

15. Liu, J., Y. Ikushima and Z. Shervani (2004). "Investigation on the solubilization or organic dyes and micro-polarity in AOT water-in-CO2 microemulsions with fluorinated co-surfactant by using UV-Vis spectroscopy." Journal of Supercritical fluids 32: 97-103.

16. Liu, J., Z. Shervani, P. Raveendrana and Y. Ikushina (2005). "Micellization of sodium bis(2-ethylhexyl)sulfosuccinate in supercritical CO2 with fluorinated co-surfactant and its solubilization of hydrophilic species." Journal of supercritical fluids 33: 121-130.

17. Koh, M., K. Park, H. Kim and H. Kim (2003). Decontamination process development using-CO2-water emulsion. 2nd International Symposium on Supercritical Fluid Technology for Energy and Environment Applications, Nagoya, Japon.

**Revendications**

1. Procédé de décontamination, de nettoyage, d'un substrat solide organique contaminé par des contaminant inorganiques, radioactifs, solides, en particules, dans lequel :

- on met en contact ledit substrat solide avec un milieu d'extraction, ne contenant pas d'eau ajoutée comprenant :

    • du $CO_2$ dense sous pression ;
    • au moins un composé tensioactif non halogéné choisi parmi les copolymères blocs de poly oxyde d'éthylène POE et de polyoxyde de propylène POP tels que les copolymères di-blocs $(OE)_x$-$(OP)_y$, les copolymères tri-blocs $(OE)_x$-$(OP)_y$-$(OE)_x$, et les copolymères triblocs $(OP)_x$-$(OE)_y$-$(OP)_x$, où x et y sont des nombres entiers de 2 à 80 avec x différent de y ; et les polydialkyl 1 à 6C siloxanes tels que le polydiméthyl siloxane ; et
    • au moins un agent complexant choisi parmi le tributylphosphate, les éthers couronnes, l'oxyde de tributylphosphine, l'oxyde de triphénylphosphine, et l'oxyde de tri-n-octylphosphine ;

- on soumet, simultanément à la mise en contact, le substrat solide et/ou le milieu d'extraction à une action mécanique..

**2.** Procédé selon la revendication 1, dans lequel ledit composé tensioactif abaisse la valeur de la tension interfaciale de référence eau/$CO_2$ en dessous de 10mN.m$^{-1}$.

**3.** Procédé selon l'une quelconque des revendications 1 et 2, dans lequel le ou les composés tensioactifs non halogéné représentent de 0, 001 à 1% en poids dudit milieu d'extraction.

**4.** Procédé selon l'une quelconque des revendications précédentes, dans lequel l'agent complexant représente de 0,001 à 1% en poids du milieu d'extraction.

**5.** Procédé selon l'une quelconque des revendications précédentes, dans lequel le $CO_2$ dense sous pression est à une pression de 50 à 700 bars, de préférence de 80 à 300 bars, de préférence encore de 100 à 150 bars ; et à une température de 15 à 200°C, de préférence de 20 à 80°C, mieux de 40 à 60°C.

**6.** Procédé selon l'une quelconque des revendications précédentes, dans lequel le $CO_2$ dense sous pression est à l'état liquide ou supercritique.

**7.** Procédé selon l'une quelconque des revendications précédentes, dans lequel on effectue des cycles de compression/décompression.

**8.** Procédé selon la revendication 7, dans lequel lesdits cycles de compression/décompression sont réalisés avec une amplitude de variation de pression de 10 à 100 bars et des intervalles de temps de 10 secondes à 10 minutes.

**9.** Procédé selon l'une quelconque des revendications précédentes dans lequel ladite action mécanique est choisie parmi une ou plusieurs parmi une agitation, une turbulence, un cisaillement, une action électromécanique et une action ultrasonique.

**10.** Procédé selon l'une quelconque des revendications précédentes, dans lequel le milieu d'extraction comprend en outre un cosolvant.

**11.** Procédé selon la revendication 10, dans lequel ledit cosolvant est choisi parmi les alcools aliphatiques inférieurs de 1 à 5 atomes de carbone, tels que l'éthanol, le méthanol, le propanol, l'isopropanol, le butanol ; les cétones telles que l'acétone : les terpènes ; les cyclohexanes ; les hexanes ; le diméthylsulfoxyde; et leurs mélanges.

**12.** Procédé selon l'une quelconque des revendications 10 à 11, dans lequel ledit cosolvant représente de 0,001 à 10% en poids du milieu d'extraction.

**13.** Procédé selon l'une quelconque des revendications précédentes, dans lequel, suite à l'extraction par le $CO_2$ dense sous pression, le $CO_2$, le composé tensioactif non halogéné, l'agent complexant, et le cosolvant éventuel d'une part, et les contaminants inorganiques, radioactifs, solides, en particules, d'autre part ; ou bien le $CO_2$ d'une part et le composé tensioactif non halogéné, l'agent complexant et le cosolvant éventuel, et les contaminants inorganiques radioactifs solides en particules d'autre part, sont séparés par une ou plusieurs étapes de séparation physico-chimique ; et le $CO_2$, le composé tensioactif non halogéné, l'agent complexant, et le cosolvant éventuel, sont recyclés, reconditionnés ensemble, ou bien le $CO_2$ est recyclé, reconditionné seul.

**14.** Procédé selon la revendication 13, dans lequel la ou lesdites étapes de séparation physico-chimiques sont réalisées dans un ou des séparateurs cyclones.

**15.** Procédé selon la revendication 14, dans lequel on sépare, d'une part, les particules solides de composés inorganiques, radioactifs extraits, tels que le $PuO_2$, avec le composé tensioactif non halogéné et, d'autre part, le $CO_2$, cette séparation étant effectuée par un effet conjugué de vortex et de diminution de la pression et de la densité du fluide.

**16.** Procédé selon la revendication 15, dans lequel on sépare, d'une part, les particules solides de composés inorganiques, tels que le $PuO_2$, et, d'autre part, une phase de fluide $CO_2$, le tensioactif non halogéné se trouvant dans cette phase de fluide $CO_2$, cette séparation étant effectuée sans chute de pression ou de température, par effet vortex, ou bien par filtration, par exemple à l'aide d'une paroi en matériau fritté.

**17.** Procédé selon l'une quelconque des revendications 15 à 16, dans lequel, avant son recyclage, le fluide, par exemple gazeux est purifié par une ou plusieurs étapes d'adsorption et/ou liquéfaction et/ou distillation.

**18.** Procédé selon l'une quelconque des revendications précédentes, dans lequel le substrat à nettoyer, décontaminer est placé dans un tambour ou panier perforé en mouvement à l'intérieur d'une enceinte sous pression contenant le fluide $CO_2$ dense sous pression.

**19.** Procédé selon la revendication 18, dans lequel le tambour ou panier est animé d'un mouvement de rotation.

**20.** Procédé selon l'une quelconque des revendications 18 et 19, dans lequel le substrat est soumis, en outre, simultanément à l'action d'un jet à grande vitesse du fluide $CO_2$ dense.

**21.** Procédé selon l'une quelconque des revendications 18 à 20, dans lequel le milieu d'extraction et/ou le substrat à décontaminer est soumis en outre à l'action d'ultrasons.

**22.** Procédé selon l'une quelconque des revendications précédentes, dans lequel le substrat organique est en un matériau solide choisi parmi les tissus artificiels synthétiques ou naturels ; les polymères, les plastiques, les résines, les latex, les caoutchouc et les matériaux composites comprenant plusieurs parmi lesdits matériaux.

**23.** Procédé selon l'une quelconque des revendications précédentes, dans lequel les contaminants inorganiques, radioactifs, solides, particulaires, sont choisis parmi les composés polaires.

**24.** Procédé selon l'une quelconque des revendications précédentes, dans lequel les contaminants sont des métaux ou métalloïdes libres sous la forme de leurs isotopes radioactifs et/ou des composés de ces métaux ou métalloïdes radioactifs, ou encore des composés tels que les isotopes radioactifs de l'iode, le tritium et les composés organiques tritiés.

**25.** Procédé selon la revendication 24, dans lequel lesdits composés de métaux ou métalloïdes sont choisis parmi leurs oxydes, leurs sels, et leurs dérivés organométalliques.

**26.** Procédé selon la revendication 24 ou 25, dans lequel lesdits métaux sont choisis parmi les métaux de transition, les actinides et les lanthanides.

**27.** Procédé selon la revendication 24 ou 25, dans lequel lesdits métaux sont choisis parmi le strontium, l'argent, le césium, l'antimoine, le cobalt, le manganèse, le néodyme, le cérium, l'uranium, le plutonium, l'américium, le lanthane et le thorium.

**28.** Procédé selon l'une quelconque des revendications 25 à 27, dans lequel le contaminant est un oxyde choisi parmi le $PuO_2$, l' $UO_2$ le $CeO_2$, le $Nd_2O_3$, et les oxydes de césium, d'américium, d'antimoine, de manganèse, de cobalt, et d'argent.

**Claims**

**1.** Process for decontaminating, cleaning a solid organic substrate contaminated by solid radioactive particulate inorganic contaminants, wherein:

- said solid substrate is brought into contact with an extraction medium, which does not contain any added water, comprising:

  • dense pressurized $CO_2$;
  • at least one nonhalogenated surface-active compound chosen from block copolymers of poly(ethylene oxide) PEO and poly(propylene oxide) PPO, such as $(EO)_x$-$(PO)_y$ diblock copolymers, $(EO)_x$-$(PO)_y$-$(EO)_x$ triblock copolymers and $(PO)_x$-$(EO)_y$-$(PO)_x$ triblock copolymers, where x and y are integers from 2 to 80 with x other than y; and polydi(1 to 6C)alkylsiloxanes, such as polydimethylsiloxane (PDMS); and
  • at least one complexing agent chosen from tributyl phosphate (TBP), crown ethers, tributylphosphine oxide, triphenylphosphine oxide and tri(n-octyl)phosphine oxide;

- the solid substrate and/or the extraction medium is/are subjected, simultaneously with the contacting operation, to a mechanical action.

2. Process according to Claim 1, wherein said surface-active compound lowers the value of the reference water/$CO_2$ interfacial tension below 10 mN.m$^{-1}$.

3. Process according to either one of Claims 1 and 2, wherein the nonhalogenated surface-active compound(s) represent(s) from 0.001 to 1% by weight of said extraction medium.

4. Process according to any one of the preceding claims, wherein the complexing agent represents from 0.001 to 1% by weight of the extraction medium.

5. Process according to any one of the preceding claims, wherein the dense pressurized $CO_2$ is at a pressure of 50 to 700 bars, preferably of 80 to 300 bars, more preferably of 100 to 150 bars; and at a temperature of 15 to 200°C, preferably of 20 to 80°C, better still of 40 to 60°C.

6. Process according to any one of the preceding claims, wherein the dense pressurized $CO_2$ is in the liquid or supercritical state.

7. Process according to any one of the preceding claims, wherein compression/decompression cycles are carried out.

8. Process according to Claim 7, wherein said compression/decompression cycles are carried out with an amplitude of variation in pressure of 10 to 100 bars and time intervals of 10 seconds to 10 minutes.

9. Process according to any one of the preceding claims, wherein said mechanical action is chosen from one or more from stirring, turbulence, shearing, electromechanical action and ultrasonic action.

10. Process according to any one of the preceding claims, wherein the extraction medium further comprises a cosolvent.

11. Process according to Claim 10, wherein said cosolvent is chosen from lower aliphatic alcohols having from 1 to 5 carbon atoms, such as ethanol, methanol, propanol, isopropanol or butanol; ketones, such as acetone; terpenes; cyclohexanes; hexanes; dimethyl sulphoxide (DMSO); and their mixtures.

12. Process according to either one of Claims 10 and 11, wherein said cosolvent represents from 0.001 to 10% by weight of the extraction medium.

13. Process according to any one of the preceding claims, wherein, subsequent to the extracting with the dense pressurized $CO_2$, the $CO_2$, the nonhalogenated surface-active compound, the complexing agent and the optional cosolvent, on the one hand, and the solid radioactive inorganic particulate contaminants, on the other hand; or else the $CO_2$, on the one hand, and the nonhalogenated surface-active compound, the complexing agent and the optional cosolvent, and the solid radioactive inorganic particulate contaminants, on the other hand; are separated by one or more physicochemical separation stage(s); and the $CO_2$, the nonhalogenated surface-active compound, the complexing agent and the optional cosolvent are recycled or reconditioned together, or else the $CO_2$ is recycled or reconditioned alone.

14. Process according to Claim 13, wherein said physicochemical separation stage or stages are carried out in one or more cyclone separators.

**15.** Process according to Claim 14, wherein, on the one hand, the solid particles of radioactive inorganic compounds extracted, such as $PuO_2$, with the nonhalogenated surface-active compound, and, on the other hand, the $CO_2$ are separated, this separation being carried out by a combined effect of vortex and of reduction in the pressure and in the density of the fluid.

**16.** Process according to Claim 15, wherein, on the one hand, the solid particles of inorganic compounds, such as $PuO_2$, and, on the other hand, a phase of $CO_2$ fluid, the nonhalogenated surfactant occurring in this phase of $CO_2$ fluid, are separated, this separation being carried out without pressure or temperature drop by a vortex effect or else by filtration, for example using a wall made of sintered material.

**17.** Process according to either one of Claims 15 and 16, wherein, before it is recycled, the fluid, for example the gaseous fluid, is purified by one or more stage(s) of adsorption and/or of liquefaction and/or of (re)distillation.

**18.** Process according to any one of the preceding claims, wherein the substrate to be cleaned or decontaminated is placed in a moving perforated drum or basket inside a pressurized chamber containing the dense pressurized fluid $CO_2$.

**19.** Process according to Claim 18, wherein the drum or basket is driven with a rotational movement.

**20.** Process according to either one of Claims 18 and 19, wherein the substrate is, in addition, simultaneously subjected to the action of a high-speed jet of the dense fluid $CO_2$.

**21.** Process according to any one of Claims 18 to 20, wherein the extraction medium and/or the substrate to be decontaminated is, in addition, subjected to the action of ultrasounds.

**22.** Process according to any one of the preceding claims, wherein the organic substrate is made of a solid material chosen from artificial, synthetic or natural fabrics; polymers, plastics, resins, latexes; rubbers; and composite materials comprising several among said materials.

**23.** Process according to any one of the preceding claims, wherein the solid radioactive particulate inorganic contaminants are chosen from polar compounds.

**24.** Process according to any one of the preceding claims, wherein the contaminants are free metals or metalloids in the form of their radioactive isotopes and/or compounds of these radioactive metals or metalloids or also compounds such as radioactive isotopes of iodine, tritium and tritiated organic compounds.

**25.** Process according to Claim 24, wherein said metal or metalloid compounds are chosen from their oxides, their salts and their organometallic derivatives.

**26.** Process according to Claim 24 or 25, wherein said metals are chosen from transition metals, actinides and lanthanides.

**27.** Process according to Claim 24 or 25, wherein said metals are chosen from strontium, silver, caesium, antimony, cobalt, manganese, neodyme, cerium, uranium, plutonium, americium, lanthanum and thorium.

**28.** Process according to any one of Claims 25 to 27, wherein the contaminant is an oxide chosen from $PuO_2$, $UO_2$, $CeO_2$, $Nd_2O_3$ and caesium, americium, antimony, manganese, cobalt and silver oxides.

**Patentansprüche**

**1.** Verfahren zum Dekontaminieren, Reinigen eines festen organischen Substrats, kontaminiert durch anorganische, radioaktive, feste, teilchenförmige Kontaminanten, bei dem man wie folgt verfährt:

- man bringt das genannte feste Substrat in Kontakt mit einem kein hinzugefügtes Wasser enthaltenden Extraktionsmedium, umfassend:

• unter Druck stehendes dichtes $CO_2$;

• wenigstens eine unhalogenierte tensioaktive Verbindung, ausgewählt unter den Blockcopolymeren von Polyethylenoxid PEO und Polypropylenoxid PPO wie etwa die Diblock-Copolymere $(EO)_x$-$(PO)_y$, die Triblock-Copolymere $(EO)_x$-$(PO)_y$-$(EO)_x$, und die Triblock-Copolymere $(PO)_x$-$(EO)_y$-$(PO)_x$ ,wo x und y ganze Zahlen von 2 bis 80 sind, mit $x \neq y$, und die Polydi(1-6C)alkylpolysiloxane wie etwa das Polydimethylsiloxan; und

• wenigstens ein Komplexier mittel, ausgewählt unter Tributylphosphat, den Kronenethern, Tributylphosphinoxid, Triphenylphosphinoxid, und Tri-n-octylphosphinoxid;

- man unterzieht - simultan zur Kontaktherstellung - das feste Substrat und/oder das Extraktionsmedium einer mechanischen Beanspruchung.

2. Verfahren nach Anspruch 1, bei dem die genannte tensioaktive Verbindung den Wert der Wasser/$CO_2$-Grenzflächenbezugsspannung unter 10mN-m$^{-1}$absenkt.

3. Verfahren nach einem der Ansprüche 1 und 2, bei dem die unhalogenierte(n) tensioaktive(n) Verbindung(en) 0,001 bis 1 Gew.% des genannten Extraktionsmediums darstellen.

4. Verfahren nach einem der vorangehenden Ansprüche, bei dem das Komplexiermittel 0,001 bis 1 Gew.% des Extraktionsmediums darstellt.

5. Verfahren nach einem der vorangehenden Ansprüche, bei dem das unter Druck stehende dichte $CO_2$ einen Druck von 50 bis 700 bar, vorzugsweise 80 bis 300 bar, beber 100 bis 150 bar, und eine Temperatur von 15 bis 200°C, vorzugsweise 20 bis 80°C, besser 40 bis 60°C aufweist.

6. Verfahren nach einem der vorangehenden Ansprüche, bei dem das unter Druck stehende dichte $CO_2$ sich im flüssigen oder überkritischen Zustand befindet.

7. Verfahren nach einem der vorangehenden Ansprüche, bei dem man Kompressions-/Dekompressionszyklen durchführt.

8. Verfahren nach Anspruch 7, bei dem die genannten Kompressions- /Dekompressionszyklen mit einer Druckänderungsamplitude von 10 bis 100 bar und Zeitintervallen von 10 Sekunden bis 10 Minuten durchgeführt werden.

9. Verfahren nach einem der vorangehenden Ansprüche, bei dem die genannte mechanische Beanspruchung, ausgewählt wird unter einem oder mehreren unter, einem Umrühren, einer Turbulenz, einer Scherung, einer elektromechanischen Einwirkung und einer Ultraschalleinwirkung.

10. Verfahren nach einem der vorangehenden Ansprüche, bei dem das Extraktionsmedium außerdem ein Cosolvent umfasst.

11. Verfahren nach Anspruch 10, bei dem der genannte Cosolvent ausgewählt wird unter den aliphatischen Niederalkoholen mit 1 bis 5 Kohlenstoffatomen wie das Ethanol, das Methanol, das Propanol, das Isopropanol, das Butanol; die Ketone wie etwa Azeton; die Terpene, die Cyclohexane; die Hexane; das Dimethylsulfoxid; und ihre Mischungen.

12. Verfahren nach einem der Ansprüche 10 bis 11, bei dem der genannte Cosolvent 0,001 bis 10 Gew.% des Extraktionsmediums darstellt.

13. Verfahren nach einem der vorangehenden Ansprüche, bei dem infolge der Extraktion durch das dichte $CO_2$-Druckfluid das $CO_2$, die unhalognierte tensioaktive Verbindung, das Komplexiermittel und der eventuelle Cosolvent einerseits und die anorganischen, radioaktiven, festen, teilchenförmigen Kontaminanten andrerseits; oder auch das $CO_2$ einerseits und die unhalogenierte tensioaktive Verbindung, das Komplexiermittel und der eventuelle Cosolvent und die anorganischen, radioaktiven, festen, teilchenförmigen Kontaminanten andrerseits, getrennt werden durch einen oder mehrere physikalisch-chemische Trennschritte; und das $CO_2$, die unhalogenierte tensioaktive Verbindung, das Komplexiermittel und der eventuelle Cosolvent zusammen recycelt, wiederaufbereitet werden, oder auch das $CO_2$ allein recycelt, wiederaufbereitet wird.

14. Verfahren nach Anspruch 13, bei dem der (die) physikalisch-chemische(n) Trennschritt(e) in einem (mehreren) Zentrifugalabscheider(n) realisiert wird (werden).

**15.** Verfahren nach Anspruch 14, bei dem man einerseits die extrahierten festen Teilchen anorganischer radioaktiver Verbindungen, wie etwa $PuO_2$ mit der unhalogenierten tensioaktiven Verbindung und andrerseits $CO_2$ trennt, wobei diese Trennung durch eine gemeinsame Einwirkung von Verwirbelung und Abnahme des Drucks und der Dichte des Fluids erfolgt.

**16.** Verfahren nach Anspruch 15, bei dem man einerseits die festen Teilchen anorganischer Verbindungen, wie etwa $PuO_2$, und andrerseits eine $CO_2$-Fluidphase trennt, wobei das unhalogenierte Tensid sich in dieser $CO_2$-Fluidphase befindet und diese Trennung ohne Druck- oder Temperaturabfall mittels Wirbeleinwirkung oder auch durch Filtrierung erfolgt, zum Beispiel mit Hilfe einer Wand aus gesintertem Material.

**17.** Verfahren nach einem der Ansprüche 15 bis 16, bei dem das zum Beispiel gasförmige Fluid vor seinem Recycling durch einen oder mehrere Adsorptions- und/oder Verflüssigungs- und/oder Destillationsschritte gereinigt wird.

**18.** Verfahren nach einem der vorhergehenden Ansprüche, bei dem das zu reinigende, dekontaminierende Substrat in einer perforierten Trommel oder einem perforierten Korb in Bewegung im Innern eines das $CO_2$-Druckfluid enthaltenden Behälters platziert wird.

**19.** Verfahren nach Anspruch 18, bei dem die Trommel oder der Korb in eine Rotationsbewegung versetzt wird.

**20.** Verfahren nach einem der Ansprüche 18 und 19, bei dem das Substrat außerdem simultan der Wirkung eines durch dichtes $CO_2$ gebildeten Hochgeschwindigkeitsstrahls ausgesetzt wird.

**21.** Verfahren nach einem der Ansprüche 18 bis 20, bei dem das Extraktionsmedium und/oder das zu dekontaminierende Substrat außerdem der Wirkung von Ultraschallwellen ausgesetzt wird.

**22.** Verfahren nach einem der vorangehenden Ansprüche, bei dem das organische Substrat aus einem festen Material ist, ausgewählt unter den synthetischen oder natürlichen künstlichen Geweben; den Polymeren, den Plasten bzw. Kunststoffen, den Harzen, den Latexen, den Kautschuken; und den mehrere der genannten Materialien umfassenden Kompositmaterialien.

**23.** Verfahren nach einem der vorangehenden Ansprüche, bei dem die teilchenförmigen, festen, radioaktiven, anorganischen Kontaminanten ausgewählt werden unter den polaren Verbindungen.

**24.** Verfahren nach einem der vorangehenden Ansprüche, bei dem die Kontaminanten freie Metalle oder Metalloide in Form von ihren radioaktiven Isotopen und/oder Verbindungen dieser radioaktiven Metalle oder Metalloide, oder auch von Verbindungen wie den radioaktiven Isotopen von Jod, Tritium und den organischen Tritiumverbindungen sind.

**25.** Verfahren nach Anspruch 24, bei dem die genannten Metall- oder Metalloidverbindungen ausgewählt werden unter ihren Oxiden, ihren Salzen und ihren organometallischen Derivaten.

**26.** Verfahren nach Anspruch 24 oder 25, bei dem die genannten Metalle ausgewählt werden unter den Übergangsmetallen, den Aktinoiden und den Lanthanoiden.

**27.** Verfahren nach Anspruch 24 oder 25, bei dem die genannten Metalle ausgewählt werden unter Strontium, Silber, Cäsium, Antimon, Kobalt, Mangan, Neodym, Cerium, Uran, Plutonium, Americium, Lanthan und Thorium.

**28.** Verfahren nach Anspruch 25 bis 27, bei dem der Kontaminant ein Oxid ist, ausgewählt unter $PuO_2$, $UO_2$, $CeO_2$, $Nd_2O_3$ und den Oxiden von Cäsium, Americium, Antimon, Mangan, Kobalt und Silber.

FIG.1

FIG.2

■ Sans tensioactif ▲ 0,01 g PE6100

Entraînement plus important des particules d'oxydes

Peu de particules entraînées

FIG.3

■ 0% ▲ 0,004% x 0,016% * 0,032% ● 0,04%

FIG.4

▲ PE 8100 ◊ PE 6100

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6312528 B1
- FR 2586938 A1
- US 4824570 A

- FR 2815559 A
- FR 2754464 A
- FR 2798879 A

**Littérature non-brevet citée dans la description**

- **TUEUR, A.** Etude et optimisation de la solubilité de b-dicétonates métalliques dans le dioxide de carbone supercritique : application à l'extraction des ions cobalteux et uranyles présents dans les sols. *Thèse de Doctorat,* 1997
- **FOX, R. V. ; B. J. MINCHER.** SFE of plutonium and americium from soil using beta diketones and TBP complexants. *ACS Symposium Series,* 2003, vol. 860, 36-49
- **MURZIN, A. A. ; V. A. BABAIN ; A. Y. SHADRIN ; V. A. KAMACHEV ; V. N. ROMANOVSKI ; V. A. STARCHENKO ; S. V. PODOINISTYN ; Y. A. REVENKO ; M. V. LOGUNOV ; N. G. SMART.** Deactivation in sub and supercritical carbon dioxide. *Radiochemistry,* 2002, vol. 44 (4), 410-415
- **MURZIN, A. A. ; V. A. BABAIN ; A. Y. SHADRIN ; V. A. KAMACHEV ; S. A. STRELKOV ; R. N. KISELEVA ; D. N. SHAFIKOV ; S. V. PODOINISTYN ; D. N. KOVALEV.** Interaction of hexafluoroacetylacetone with metal and their alloys in the medium of supercritical carbon dioxide in the processes of equipment decontamination. *Radiochemistry,* 2003, vol. 45 (2), 131-134
- **MIURA, S. ; M. KAMIYA ; K. NOMURA ; T. KOYAMA ; S. OGUMO ; T. SHIMADA ; Y. MORI ; Y. ENOKIDA ; I. YAMAMOTO.** Extraction of uranium and plutonium from irradiated fuel in Super-DIREX reprocessing system. *2nd International Symposium on Supercritical Fluid Technology for Energy and Environment Applications,* 2003
- **TOEWS, K. L. ; N. G. SMART ; C. M. WAI.** Complexation and transport of uranyl nitrate in supercritical carbon dioxide with organophosporus reagents. *Radiochimica Acta,* 1996, vol. 75, 179-184
- **LIN, Y. ; C. M. WAI ; F. M. JEAN ; R. D. BRAUER.** Supercritical fluid extraction of thorium and uranium ions from solid and liquid materials with fluorinated b diketones and tributyl phosphate. *Environmental Science and Technology,* 1994, vol. 28, 1190-1193

- **LIN, Y. ; N. G. SMART ; C. M. WAI.** Supercritical fluid extraction of uranium and thorium from nitric acid solution with organophosphorus reagent. *Environmental Science and Technology,* 1995, vol. 29, 2706-2708
- **MURZIN, A. A. ; V. A. BABAIN ; A. Y. SHADRIN ; I. SMIRNOV ; V. N. ROMANOVSKY ; M. Z. MURADYMOV.** Supercritical fluid extraction of uranium and transuranium and rare earth elements from surface of solids. *Radiochemistry,* 1998, vol. 40 (1), 47-51
- **HUTTON, B. R. ; J. M. PERERA ; F. GRIESER ; G. W. STEVENS.** Investigation of AOT reverse microemulsions in supercritical carbon dioxide. *Colloids and surfaces A: Physiochemical and Engeenering Aspects,* 1999, vol. 146, 227-241
- **HUTTON, B. R. ; J. M. PERERA ; F. GRIESER ; G. W. STEVENS.** AOT reverse microemulsions in SC CO2 - a further investigation. *Colloids and surfaces A: Physiochemical and Engeenering Aspects,* 2001, vol. 189, 177-181
- **LIU, J. C. ; B. X. HAN ; J. L. ZHANG ; G. Z. LI ; X. ZHANG ; J. YANG ; B. DONG.** Formation of water in CO2 microemulsions with non fluorous surfactant Ls-54 and solubilisation of biomacromolecules. *Chem. A: Eur.J.,* 2002, vol. 8, 1356-1360
- **LIU, J. C. ; J. L. ZHANG ; B. X. HAN ; G. Z. LI ; G. Y. YANG.** Study on the phase behavior of supercritical CO2/Dynol-604/Water System and solubilisation of methyl orange in the microemulsion. *Chinese Chemical letters,* 2002, vol. 13 (1), 87
- **LIU, J. ; J. ZHANG ; T. MU ; B. X. HAN ; G. Z. LI ; J. S. WANG ; B. DONG.** An investigation of non fluorous surfactant Dynol 604 based water-in-CO2 reverses micelles by small angle X-ray scattering. *Journal of Supercritical fluids,* 2003, vol. 26, 275-280
- **LIU, J. ; Y. IKUSHIMA ; Z. SHERVANI.** Investigation on the solubilization or organic dyes and micro-polarity in AOT water-in-CO2 microemulsions with fluorinated co-surfactant by using UV-Vis spectroscopy. *Journal of Supercritical fluids,* 2004, vol. 32, 97-103

• **LIU, J. ; Z. SHERVANI ; P. RAVEENDRANA ; Y. IKUSHINA.** Micellization of sodium bis(2-ethylhexyl)sulfosuccinate in supercritical CO2 with fluorinated co-surfactant and its solubilization of hydrophilic species. *Journal of supercritical fluids,* 2005, vol. 33, 121-130

• **KOH, M. ; K. PARK ; H. KIM ; H. KIM.** Decontamination process development using-CO2-water emulsion. *2nd International Symposium on Supercritical Fluid Technology for Energy and Environment Applications,* 2003